# EUROPÄISCHE PATENTSCHRIFT

(11) **EP 3 648 986 B1**
(45) Veröffentlichungstag und Bekanntmachung des Hinweises auf die Patenterteilung: **07.12.2022**
(21) Anmeldenummer: 18745832.8
(22) Anmeldetag: 05.07.2018
(51) Int. Cl.: B60B 11/10, B60B 15/26, B60B 19/00

(54) **NOTLAUFRAD MIT MONTAGEELEMENT**
EMERGENCY WHEEL WITH MOUNTING ELEMENT
ROUE POUR ROULAGE À PLAT AVEC ÉLÉMENT DE MONTAGE

(30) Priorität: 06.07.2017 DE 102017115182
(43) Veröffentlichungstag der Anmeldung: 13.05.2020
(73) Patentinhaber: GV Engineering GmbH, 71296 Heimsheim (DE)
(72) Erfinder: TSIBERIDIS, Konstantin, 74199 Untergruppenbach (DE)
(74) Vertreter: Beyer, Andreas
(86) Internationale Anmeldenummer: PCT/EP2018/068295
(87) Internationale Veröffentlichungsnummer: WO 2019/008114

(56) Entgegenhaltungen:
- EP-A1- 0 606 946
- FR-A- 1 043 038
- US-A- 3 679 267
- US-A1- 2009 267 404

## Beschreibung

Die vorliegende Erfindung betrifft einen Aufsatz für ein Fahrzeugrad zur Ermöglichung eines Fahrbetriebs bei eingeschränkter Reifenfunktion nach dem Oberbegriff des Anspruchs 1.

Mit einem Fahrzeugrad ist dabei ein Fahrzeugrad eines Kraftfahrzeugs gemeint. Unter einem Fahrbetrieb bei eingeschränkter Reifenfunktion ist dabei vorliegend ein Fahrbetrieb gemeint, bei dem der Reifen nicht mit seinen bei üblichen Straßenverhältnissen und üblichem Reifenzustand gegebenen Eigenschaften betreibbar ist. Damit kann beispielsweise eine Fahrt mit plattem Reifen gemeint sein oder auch der Betrieb des Fahrzeugs bei Eis- oder Schneeglätte. Bevorzugtes Anwendungsgebiet der vorliegenden Erfindung ist die Ermöglichung einer Fahrt mit plattem Reifen.

Mit axialer Richtung ist vorliegend die Richtung der Drehachse des Fahrzeugrades gemeint. Mit der radialen Richtung ist die orthogonale Richtung zu dieser Drehachse des Fahrzeugrades gemeint. Der Reifen des Fahrzeugrades ist also von der Felge des Fahrzeugrades aus gesehen radial außenliegend angeordnet. Radial innenliegend ist beispielsweise ein Lochkreis der Radnabe bzw. des Fahrzeugrades, wobei vorliegend unter dem Lochkreis des Fahrzeugrades die Anordnung der Schraubenöffnungen zur Einbringung der Befestigungsschrauben in die Radnabe gemeint ist. Der Lochkreis umfasst dabei üblicherweise auch eine Mittenöffnung. Mit Umfangsrichtung ist die Richtung entlang des Umfangs des Fahrzeugrades, also entlang seiner Lauffläche, gemeint.

Das Dokument EP 0 606 946 A1 offenbart eine Vorrichtung zum Ersetzen eines platten Reifens, wobei die Vorrichtung eine Platte mit einem Segment aufweist, das aus der Ebene der Platte hinausklappbar am Rest der Platte angelenkt ist. Sobald die Vorrichtung am Fahrzeugrad angebracht ist, wird das Fahrzeug geringfügig vorwärts oder rückwärts bewegt, sodass ein ringartiger Gummikranz der Vorrichtung auf die Straße gelangt, während das Segment mit dem ihm zugeordneten Kranzabschnitt von der Straße abhebt, damit das Segment in die komplett kreisförmige Stellung zurückzuklappen kann, in der es mittels eines Riegels gesichert wird.

Das Dokument FR 1 043 038 A beschreibt ein Notrad mit einem schwenkbaren Segment, das in einem Winkel von etwa 100° zurückgeklappt ist, damit es bei der Montage des Notrades an einem Rad mit Reifenschaden nicht stört, indem es gegen den Boden stößt. Unter der Wirkung einer Feder richtet sich das Segment automatisch auf, sobald sich das Rad zu drehen beginnt. Dabei löst sich das schwenkbare Segment vom Boden und rastet, bevor es am Kotflügel anstößt, in einer Position ein, in der es in der Ebene des Notrades liegt.

In dem Dokument US 3 679 267 A ist ein Ersatzrad mit zwei Radsegmenten offenbart, die miteinander mittels zweier Bänder verbunden sind, wobei die Bänder an einem ihrer Enden starr an der Oberfläche des Radsegments befestigt sind und wobei die entgegengesetzten Enden der Bänder geschlungen und drehbar an einem Paar kollinearer Bolzen angebracht sind, die wiederum starr am Radsegment befestigt sind. Das innere Ende eines zum Eingriff mit dem Rad vorgesehenen Befestigungselements umfasst mehrere Zähne, die in die Oberfläche des Rades eingreifen. Das äußere Ende jedes Befestigungselements ist betriebsfähig mit einem diametral entgegengesetzten Befestigungselement über ein Paar Gewindestangen und eine Spannschlossmutter verbunden, sodass die Drehung der Spannschlossmutter bewirkt, dass sich das innere Ende des Befestigungselements entweder radial einwärts und vom Rad weg oder radial nach außen bewegt, sodass die Zähne in das Rad eingreifen.

Aus dem Dokument US 2009/267404 A1 ist eine Reserveradanordnung mit zwei im Wesentlichen ähnlichen Reifenhälften bekannt, wobei die erste Reifenhälfte eine halbzylindrische Schale mit einer ersten ebenen Endoberfläche und einer gekrümmten äußeren Verschalung aufweist. Ein Zentralabschnitt der ebenen Endoberfläche weist mehrere Löcher auf, die dazu eingerichtet sind, speziell ausgestaltete Verbinder aufzunehmen.

Aufgabe der vorliegenden Erfindung ist es, einen Aufsatz für ein Fahrzeugrad bereitzustellen, der sich einfach und sicher montieren lässt, insbesondere derart, dass das Fahrzeugrad bei der Montage nicht abgenommen werden muss und das Fahrzeug bei der Montage auch nicht, beispielsweise über einen Wagenheber, angehoben werden muss.

Diese Aufgabe wird durch einen erfindungsgemäßen Aufsatz nach Anspruch 1 gelöst.

Ein derartiger erfindungsgemäßer Aufsatz mit einem Grundkörper ausgebildet, wobei der Grundkörper in einem Betriebszustand des Aufsatzes eine kreisringförmige Lauffläche aufweist, wobei der Grundkörper wenigstens ein erstes umfängliches Segment und ein zweites umfängliches Segment umfasst, wobei das erste umfängliche Segment in Umfangsrichtung starr ausgebildet ist und am Fahrzeugrad befestigbar ist, vorzugsweise wobei das erste umfängliche Segment einen Befestigungsabschnitt umfasst, über den es an einem Lochkreis des Fahrzeugrades befestigbar, vorzugsweise verschraubbar, ist, und wobei der Aufsatz ein Montageelement umfasst, das an dem ersten umfänglichen Segment derart befestigt ist oder befestigbar ist, dass es in eine Montageposition überführbar ist oder sich in der Montageposition befindet, wobei das Montageelement das zweite umfängliche Segment gegenüber dem ersten umfänglichen Segment ausrichtet und gegen die Felge des Fahrzeugrads drängt, wenn das erste umfängliche Segment am Fahrzeugrad befestigt ist und sich das Montageelement in der Montageposition befindet.

Bei dem erfindungsgemäßen Aufsatz lässt sich zunächst das erste umfängliche Segment am Fahrzeugrad befestigen. Da sich das erste umfängliche Segment nicht um den gesamten Umfang bzw. Gesamtumfang des Fahrzeugrades erstreckt, sondern dieser Gesamtumfang auch noch wenigstens das zweite umfängliche Segmente umfasst, kann das erste umfängliche Segmente in einfacher Weise an das Fahrzeugrad angefügt und befestigt werden, ohne dass das Fahrzeugrad abgenommen werden muss oder das Fahrzeug angehoben werden muss. Diese Befestigung kann beispielsweise über Spanngurte oder andere geeignete Fixiermittel erfolgen. Bevorzugterweise erfolgt die Befestigung jedoch über den Befestigungsabschnitt. Dieser Befestigungsabschnitt ist dabei bevorzugt derart ausgebildet, dass er am Lochkreis des Fahrzeugrades befestigbar ist. Vorzugsweise ist der Befestigungsabschnitt am Lochkreis des Fahrzeugrades verschraubbar. Hierzu kann der Befestigungsabschnitt ein Lochmuster aufweisen, das teilweise dem Lochmuster des Lochkreises entspricht. Damit ist gemeint, dass wenigstens zwei Schrauben, die im Lochmuster des Lochkreises eingebracht werden derart angeordnet sind, dass sie sich in axialer Richtung gesehen im Bereich der Löcher des Lochmusters des Befestigungsabschnitts befinden. Eine standardmäßige Befestigungsschraube des Fahrzeugrades kann dann im Zuge der Montage des Aufsatzes zunächst entfernt werden und durch eine Aufsatzbefestigungsschraube, die ein Innengewinde in ihrem Kopf aufweist ersetzt werden. In dieses Innengewinde im Kopf der Aufsatzbefestigungsschraube kann dann eine weitere Schraube eingeschraubt werden, über die der Befestigungsabschnitt des Aufsatzes am Fahrzeugrad befestigt werden kann. Hierdurch wird sichergestellt, dass der Befestigungsabschnitt und damit auch das erste umfängliche Segment, das mit dem Befestigungsabschnitt verbunden ist, sicher gegen die Felge des Fahrzeugrads fixiert sind. Im Sinne der vorliegenden Erfindung ist auch eine Anbringung des Befestigungsabschnitts im Bereich des Mittellochs, wobei der Befestigungsabschnitt entsprechend ausgebildet ist. Das erste umfängliche Segment kann dann in einfacher Weise mit radial weiter außen liegenden weiteren Spannmitteln an der Felge bzw. am Fahrzeugrad befestigt werden. Ein vorteilhaftes Beispiel für derartige Spannmittel wird weiter unten noch näher im Detail erläutert. Im Anschluss an die eben beschriebenen Schritte kann das zweite umfängliche Segment an seiner vorgesehenen Stelle positioniert werden. Um das zweite umfängliche Segment ebenso mit Spannmitteln am Fahrzeugrad bzw. Felge sicher befestigen zu können, ist es nötig, dieses gegenüber dem ersten umfänglichen Segment in der vorgesehenen Position auszurichten und möglichst dicht an der Felge des Fahrzeugrads zu positionieren. Diese Ausrichtung und Positionierung erfolgt über das Montageelement. Das zweite umfängliche Segment wird locker an der vorgesehenen Stelle positioniert und anschließend über das Montageelement präzise gegenüber dem ersten umfänglichen Segment ausgerichtet und in Richtung der Felge des Fahrzeugrades gedrängt. Anschließend kann das zweite umfängliche Segment ebenso über Spannmittel an der Felge befestigt werden.

Vorteilhaft ist, wenn das Montageelement gegenüber dem ersten umfänglichen Segment verschwenkbar oder verschiebbar ist. Hierdurch kann das Montageelement von einer Position, in der es sich befindet, wenn das erste umfängliche Segment am Fahrzeugrad befestigt wird, in einfacher Art und Weise in die Montageposition überführt werden.

Bevorzugt ist auch, wenn das Montageelement über eine Aufsatzbefestigungsschraube, wie sie oben beschrieben wurde, also eine Aufsatzbefestigungsschraube die ein Innengewinde in ihrem Kopf aufweist, gegenüber dem Fahrzeugrad bzw. Fahrzeugfelge befestigt wird. Beispielsweise kann das Montageelement dann Langlöcher aufweisen, durch die die derartige Schraube geführt ist. Die Langlöcher können dabei gebogen oder geradlinig ausgeführt sein je nachdem ob das Montageelement verschwenkbar oder verschiebbar ausgebildet sein soll.

Gemäß der Erfindung weißt auch das Montageelement ein Lochmuster auf, dass jedenfalls ein Teil des Lochmusters des Lochkreis des Fahrzeugrades entspricht. Damit ist gemeint, dass wenigstens zwei Schrauben, die im Lochmuster des Lochkreises eingebracht werden derart angeordnet sind, dass sie sich in axialer Richtung gesehen im Bereich der Löcher des Lochmusters des Montageelements befinden. Im Sinne der vorliegenden Erfindung ist auch eine Anbringung des Montageelements im Bereich des Mittellochs.

Bevorzugt ist auch, wenn der Aufsatz eine Einrichtung zum klemmenden und/oder hintergreifenden Erfassen einer Radschraube umfasst, und wenn das Montageelement und/oder ein Befestigungsabschnitt über die Einrichtung zum klemmenden und/oder hintergreifenden Erfassen einer, vorzugsweise herkömmlichen, Radschraube am Fahrzeugrad befestigbar ist.

Bevorzugt ist auch, wenn das Montageelement von dem ersten umfänglichen Segment lösbar ist. Hierdurch ist der Aufsatz flexibel verstaubar. Für die Montage des Aufsatzes am Fahrzeugrad kann das Montageelement dann beispielsweise direkt mit dem ersten umfänglichen Segment verbunden werden. Eine derartige Verbindung kann beispielsweise über Schrauben oder einen Einrastmechanismus oder in sonstiger Art realisiert werden. Das Montageelement kann jedoch auch indirekt mit dem ersten umfänglichen Segment verbunden werden, beispielsweise über die oben genannten Schrauben, die in den Lochkreis des Fahrzeugrades bzw. in dort befindliche Aufsatzbefestigungsschrauben mit Innengewinde im Kopf eingeschraubt werden. Das Montageelement ist dann zwar mit dem ersten umfänglichen Segment verbunden bzw. an diesem befestigt jedoch nicht direkt über die Schrauben an diesem befestigt.

Vorteilhaft ist außerdem, wenn an dem ersten umfänglichen Segment und/oder an dem zweiten umfänglichen Segment Sicherungseinrichtungen für das Montageelement angeordnet sind, um dessen Position, vorzugsweise in Umfangsrichtung, gegenüber dem ersten umfänglichen Segment bzw. dem zweiten umfänglichen Segment festzulegen. Mit Sicherungseinrichtungen sind dabei beispielsweise Einrichtungen gemeint, die bei umfänglich verschwenkbarem Montageelement ein seitliches Verschwenken aus der Sicherungseinrichtung verhindern. Eine derartige Sicherungseinrichtung kann beispielsweise in Form von Erhebungen ausgebildet sein, die seitlich von einer vorgesehenen Position für das Montageelement angeordnet sind. Wird das Montageelement in axialer Richtung auf den Aufsatz aufgesetzt, so liegt das Montageelement in dieser Sicherungseinrichtung und kann seitlich nicht mehr verschwenkt werden. Um das Montageelement seitlich zu Verschwenken kann seine Befestigung gelockert werden und das Montageelement in axialer Richtung abgehoben werden und aus der Sicherungseinrichtung hinaus geschwenkt werden. Eine Sicherungseinrichtung kann jedoch ausgebildet sein um ein Verschieben des Montageelements zu unterbinden. Hierzu kann das Montageelement beispielsweise eine Ausnehmung aufweisen, in welche ein Vorsprung an dem ersten und oder zweiten umfänglichen Segment eingreifen kann. Diese Sicherungseinrichtungen geben damit quasi bevorzugte Positionen für das Montageelement gegenüber dem ersten bzw. zweiten umfänglichen Segment vor. Bevorzugterweise sind diese Sicherungseinrichtungen im Bereich von Spannmitteln, auf die später anhand einer beispielhaften Ausführungsform noch im Detail eingegangen wird, angeordnet. Das Montageelement ist dann in einer vorgesehenen Position im Bereich dieser Spannmittel angeordnet, sodass diese Spannmittel in vorteilhafter Weise für eine endgültige Befestigung des Aufsatzes am Fahrzeugrad verwendet werden können.

Eine Befestigung über die Mittenöffnung ist jeweils für den Befestigungsabschnitt als auch für das Montageelement prinzipiell über ein Eingriffselement möglich. Das Eingriffselement kann beispielsweise direkt, also ohne eine Spannschraube mit dem Befestigungsabschnitt als auch mit dem Montageelement verbindbar sein. Denkbar ist jedoch auch eine Ausführungsform, bei der das Eingriffselement über eine Spannschraube mit dem Befestigungsabschnitt oder dem Montageelement verbindbar ist. Das Eingriffselement kann derart ausgebildet sein, um einen Abschnitt der Mittenöffnung formschlüssig zu hintergreifen. Ein derartiger formschlüssiger Hintergriff kann beispielsweise über elastisch verschwenkbare bzw. verbiegsame Finger gebildet sein. Denkbar ist jedoch auch eine Ausführungsform, bei der ein Eingriffsabschnitt, beispielsweise durch eine Madenschraube, aufweitbar ist, und hierdurch in der Mittenöffnung verspannt werden kann.

Vorteilhaft ist, wenn der Aufsatz ein Eingriffselement umfasst, das ausgebildet ist, um den Befestigungsabschnitt und/oder das Montageelement an der Mittenöffnung direkt oder indirekt, vorzugsweise über ein Spannelement, insbesondere über eine Spannschraube, zu befestigen, vorzugsweise, wobei das Eingriffselement einen Eingriffsabschnitt umfasst, der ausgebildet ist, um einen Abschnitt, vorzugsweise eine Nut, der Mittenöffnung formschlüssig zu hintergreifen, vorzugsweise wobei der Eingriffsabschnitt mechanisch aufweitbar oder elastisch schwenkbar ist.

Eine Spannschraube stellt eine mögliche Ausführungsform eines Spannelements dar mit dem der Befestigungsabschnitt und/oder das Montageelement gegen das Eingriffselement spannbar sind. Generell ist mit einem Spannelement ein Element gemeint, mit dem das Montageelement bzw. der Befestigungsabschnitt gegen das Eingriffselement gezogen bzw. gespannt werden kann bzw. spannbar ist.

In einer vorteilhaften Ausführungsform ist vorgesehen, dass das Montageelement und/oder der Befestigungsabschnitt ein Lochmuster umfasst bzw. umfassen, das jedenfalls einem Teil des Lochmusters des Lochkreises des Fahrzeugrades entspricht. Dieser erleichtert die Befestigung des Montageelements bzw. des Befestigungsabschnitts an dem Lochkreis unter Verwendung der oben beschriebenen Aufsatzbefestigungsschrauben mit Innengewinde im Kopf.

Vorteilhaft ist außerdem, wenn das erste umfängliche Segment einen kreisbogenartig ausgebildeten Abschnitt umfasst, vorzugsweise wobei der kreisbogenartige Abschnitt eine umfängliche Erstreckung von mehr als 180°°, vorzugsweise von mehr als 190°, insbesondere von mehr als 195°, aufweist, vorzugsweise wobei sich ein etwaig vorhandener Befestigungsabschnitt kreissehnenartig über den Bereich des Lochkreises des Fahrzeugrades erstreckt. Hierdurch erhält der Aufsatz bzw. das erste umfängliche Segmente des Aufsatzes eine besonders hohe mechanische Stabilität bei gleichzeitig niedrigem Gewicht. Ist dabei der oben beschriebene Befestigungsabschnitt vorgesehen, so erhöht sich die Stabilität weiter und der Aufsatz lässt sich in besonders einfacher Weise am Fahrzeugrad anbringen, wobei das Gewicht des Aufsatzes gering bleibt.

Bevorzugt ist, wenn das zweite umfängliche Segment eine umfängliche Erstreckung von wenigstens 45°, vorzugsweise wenigstens 60°, vorzugsweise wenigstens 90°, insbesondere wenigstens 120°, insbesondere wenigstens 150°, aufweist.

Bevorzugt ist, wenn das erste umfängliche Segment eine umfängliche Erstreckung von mehr als 180°, vorzugsweise von mehr als 190°, insbesondere von mehr als 195°, aufweist.

Vorteilhaft ist auch, wenn das Montageelement V-förmig ausgebildet ist, wobei sich zwei Schenkel des Montageelements in der Montageposition wenigstens vom Lochkreis bis zum zweiten umfänglichen Segment erstrecken, oder dass das Montageelement stabartig ausgebildet ist, wobei es sich in der Montageposition wenigstens vom Lochkreis bis zum zweiten umfänglichen Segment erstreckt, vorzugsweise wobei es sich vom ersten umfänglichen Segment über den Lochkreis zum zweiten umfänglichen Segment erstreckt. Denkbar ist auch, dass zwei derartige stabförmige Montageelemente vorgesehen sind. Derartige Montageelemente können variabel gegenüber einander bewegbar ausgebildet sein oder starr in einer X-Form miteinander verbunden sein.

Vorteilhaft ist auch, wenn das zweite umfängliche Segment über eine Scharniereinrichtung, vorzugsweise über zwei Scharniereinrichtungen, schwenkbar an dem ersten umfänglichen Segment befestigt ist. Zum Transport des Aufsatzes kann dann das zweite umfängliche Segment auf das erste umfängliche Segmente geklappt werden. Bei der Montage des Aufsatzes kann diese geklappte Konfiguration zunächst beibehalten werden. Wenn das erste umfängliche Segment am Fahrzeugrad befestigt ist kann das zweite umfängliche Segment aufgeklappt werden, so dass sich eine geschlossene Kreisscheiben- bzw. Kreisringscheibenform des Aufsatzes ergibt. Die genaue Ausrichtung des zweiten umfänglichen Segments kann dann über das Montageelement gegenüber dem ersten umfänglichen Segment festgelegt werden, entsprechend müssen die oben genannten Scharniereinrichtungen nicht übermäßig präzise ausgebildet sein und insbesondere keinen Verriegelungsmechanismus aufweisen. Bevorzugt ist hier insbesondere, wenn das erste umfängliche Segment den bereits weiter oben beschriebenen kreisbogenartig ausgebildeten Abschnitt umfasst und an dessen Enden jeweils eine der Scharniereinrichtungen angeordnet ist, wobei besonders bevorzugt ist, wenn dieser kreisbogenartige ausgebildete Abschnitt eine umfängliche Erstreckung von mehr als 180° aufweist und das zweite umfängliche Segment komplementär zu dem kreisbogenartigen Abschnitt ausgebildet ist. Wird das zweite umfängliche Segment dann wie vorgesehen aufgeklappt, so ergibt sich ein kreisförmiger Umriss des Aufsatzes durch die beiden sich ergänzenden umfänglichen Segmente.

Vorteilhaft ist auch, wenn an dem ersten umfänglichen Segment und/oder an dem zweiten umfänglichen Segment wenigstens ein Spannmittel, vorzugsweise mehrere Spannmittel, mit einem Hakabschnitt angeordnet ist bzw. sind, wobei der Hakabschnitt ausgebildet ist, um in einem Betriebszustand des Aufsatzes einen Abschnitt, insbesondere ein Felgenhorn, der Felge des Fahrzeugrads zu hintergreifen. Mit dem Betriebszustand des Aufsatzes ist ein Zustand gemeint, indem der Aufsatz am Fahrzeugrad in seiner gewünschten Endkonfiguration, in dem Zustand, in dem er zur Fahrt des Fahrzeugs verwendet werden soll, angebracht ist. Vorteilhafterweise sind derartige Spannmittel im Betriebszustand des Aufsatzes radial auswärts vom Lochkreis der Felge angeordnet. Die Spannmittel haben den Vorteil, dass der Aufsatz besonders sicher am Fahrzeugrad befestigt ist. Insbesondere Spannmittel, die das Felgenhorn hintergreifen, sichern den Aufsatz vorteilhaft gegen ein verbiegen ab, da sie nahe an der Lauffläche des Aufsatzes bzw. des Fahrzeugrades einen sicheren Kontakt mit der Felge des Fahrzeugrades herstellen.

Vorteilhaft ist auch, wenn die Spannmittel in radialer Richtung und/oder in axialer Richtung verschwenkbar und/oder verschiebbar gegenüber den umfänglichen Segmenten sind, vorzugsweise wobei der Aufsatz einen Kopplungsmechanismus umfasst, der eine Bewegung wenigstens zweier Spannmittel beim Betätigen eines der über den Kopplungsmechanismus gekoppelten Spannmittel in radialer Richtung und/oder in axialer Richtung koppelt, vorzugsweise wobei der Kopplungsmechanismus derart ausgebildet ist, dass die Bewegung der gekoppelten beweglichen Spannmittel gleichförmig ist. Durch die Beweglichkeit der Spannmittel ist ein Hintergreifen der Felge bzw. des Felgenhorns in einfacher Weise implementierbar. Insbesondere eine gekoppelte Bewegung der Spannmittel ermöglicht eine besonders einfache Befestigung des Aufsatzes am Fahrzeugrad und hat überdies einen selbstzentrierenden Effekt auf den Aufsatz.

Vorteilhaft ist auch, wenn die Spannmittel eine in axialer Richtung gesehen nach radial innen, vorzugsweise linear oder bogenförmig, abfallende Spannfläche umfassen, wobei die Spannmittel derart ausgebildet sind, dass sich die Spannfläche beim Befestigen und Verspannen des Aufsatzes an der Felge nach radial innen bewegt, insbesondere verschiebt, und die Spannfläche derart ausgebildet ist, dass der Aufsatz beim Befestigen und Verspannen an der Felge des Fahrzeugrads in axialer Richtung zur Felge hin gedrängt wird. Hierdurch wird ein besonders enger Kontakt des Aufsatzes mit der Felge vorzugsweise ein Anliegen an der Felge erreicht, was sich vorteilhaft auf die Stabilität der Befestigung des Aufsatzes auswirkt.

Im Bereich der Kontaktierung der Felge kann der Aufsatz vorteilhafterweise eine elastische Dämpfungseinrichtung umfassen, um Beschädigungen der Felge zu verhindern.

Vorteilhaft ist auch, wenn die Spannmittel im Bereich ihres Hakabschnitts bzw. ihrer Spannfläche nachgiebige, elastische Beschichtungen zur Verhinderung einer Beschädigung der Felge, insbesondere des Felgenhorns, umfassen.

Der Grundkörper ist vorzugsweise unter Verwendung von Stahl hergestellt. Andere Materialien sind jedoch ebenso denkbar.

Die Spannmittel können vom Grundkörper lösbar ausgebildet sein. Die Spannmittel können hierzu beispielsweise an einem Haltebock befestigt sein, bzw. lösbar befestigbar sein. Eine derartige lösbare Befestigung ist beispielsweise über eine Schraubverbindung realisierbar. Vorzugsweise bewegen oder schwenken die Spannmittel bei Anziehen einer derartigen Schraubverbindung nach radial innen.

Vorteilhafterweise ist der Hakabschnitt der Spannmittel, in Umfangsrichtung gekrümmt ausgebildet, um flächig an der Felge, insbesondere dem Felgenhorn, anzuliegen.

Optional ist, wenn der Aufsatz einen Verspannmechanismus mit einem Kontaktabschnitt umfasst, der ausgebildet ist, um das Spannmittel zu betätigen und den Hakabschnitt in Hintergriff mit dem Abschnitt der Felge, vorzugsweise dem Felgenhorn, zu bringen, wenn der Kontaktabschnitt, betätigt, insbesondere mit Druck beaufschlagt, wird. Durch den Verspannmechanismus mit dem Kontaktabschnitt ist es möglich, dass die Spannmittel stets sicher und in reproduzierbarer Weise in Hintergriff mit dem Abschnitt der Felge bzw. dem Felgenhorn geführt werden. Der Eingriff der Spannmittel erfolgt quasi automatisiert und damit stets reproduzierbar. Der erfindungsgemäße Aufsatz wird hierzu zunächst am Fahrzeugrad angebracht. Eine endgültige und für den Fahrbetrieb sichere Befestigung erfolgt durch den Hintergriff des Spannmittels bzw. der Spannmittel am Abschnitt der Felge bzw. am Felgenhorn. Das Hintergreifen des Abschnitts der Felge bzw. des Felgenhorns erfolgt quasi automatisch. Beispielsweise kann der Kontaktabschnitt derart ausgebildet und angeordnet sein, dass dieser Hintergriff bei der ersten Drehung des Fahrzeugrades zustande kommt. Hierzu ist der Kontaktabschnitt beispielsweise derart ausgebildet und angeordnet, dass er über die Lauffläche des Aufsatzes hinaus ragt, sodass wenn das Fahrzeugrad bei der ersten Umdrehung mit dem Kontaktabschnitt die Fahrbahn kontaktiert, dadurch betätigt wird, und der Kontaktabschnitt durch den Kontakt mit der Fahrbahn in den Aufsatz gedrückt wird und diese Kraft auf das Spannmittel übertragen wird, wodurch das Spannmittel betätigt und dabei auf die Felge, insbesondere das Felgenhorn, hin bewegt wird. Bei dieser Bewegung des Spannmittels auf die Felge bzw. das Felgenhorn hin, wird der Hakabschnitt in Hintergriff mit dem Abschnitt der Felge bzw. dem Felgenhorn gebracht. Der Kontaktabschnitt kann auch auf der der Felge zugewandten Seite des Aufsatzes angeordnet sein. Wird der Aufsatz dann gegen die Felge gespannt beispielsweise über einen Spanngurt oder die den Befestigungsabschnitt, so wird der Kontaktabschnitt betätigt und damit das Spannmittel betätigt, sodass es in Hintergriff mit der Felge, insbesondere dem Felgenhorn, gelangt.

Optional ist, wenn der Verspannmechanismus ausgebildet ist, um mit dem Kontaktabschnitt bei am Fahrzeugrad vorläufig angebrachtem Aufsatz und sich drehendem Fahrzeugrad eine Fahrbahn zu kontaktieren und dadurch den Kontaktabschnitt zu betätigen, insbesondere mit Druck zu beaufschlagen, vorzugsweise wobei der Kontaktabschnitt räumlich, insbesondere in axialer Richtung gesehen, in der Lauffläche des Aufsatzes angeordnet ist und vorzugsweise wobei der Kontaktabschnitt in einem ausgefahrenen Zustand in Umfangsrichtung absatzfrei mit der Lauffläche des Aufsatzes verläuft. Hierdurch kann der Kontaktabschnitt einfach beim Fahrbetrieb während der ersten Umdrehung des Fahrzeugrades betätigt werden.

Optional ist, wenn der Verspannmechanismus ausgebildet ist, um mit dem Kontaktabschnitt die Felge zu kontaktieren, wenn der Aufsatz am Fahrzeugrad angebracht wird, und dadurch den Kontaktabschnitt zu betätigen, insbesondere mit Druck zu beaufschlagen, vorzugsweise wobei der Kontaktabschnitt auf der der Felge zugewandten Seite des Aufsatzes angeordnet ist. Hierdurch werden die Spannmittel quasi automatisch in Hintergriff bewegt, wenn der Aufsatz gegen das Fahrzeugrad gespannt wird.

Optional ist, wenn der Verspannmechanismus eine Freilaufeinrichtung umfasst, wobei die Freilaufeinrichtung ausgebildet ist, um eine freie Bewegung des Kontaktabschnitts zu ermöglichen, wenn der Hakabschnitt in Hintergriff mit dem Abschnitt der Felge, insbesondere dem Felgenhorn, steht. Beschädigungen der Felge werden hierdurch zuverlässig vermieden.

Optional ist, wenn das Spannmittel über eine Druckbegrenzungseinrichtung, die einen Druck mit dem das Spannmittel zur Felge hin gedrängt wird und/oder mit der das Spannmittel die Felge kontaktiert auf einen Grenzdruck begrenzt, mit dem Verspannmechanismus gekoppelt ist. Ein schädigendes Kontaktieren der Felge mit zu viel Druck wird hierdurch zuverlässig vermieden.

Optional ist, wenn der Verspannmechanismus einen Haltemechanismus umfasst, der ausgebildet ist, um das Spannmittel in seiner Position zu halten, wenn das Spannmittel mit seinem Hakabschnitt in Hintergriff mit dem Abschnitt der Felge, vorzugsweise dem Felgenhorn, steht. Ungewolltes lösen der Spannmittel wird hierdurch verhindert.

Vorteilhafterweise umfasst der Aufsatz eine Positioniereinrichtung zur zentrierten Positionierung des Aufsatzes an der Felge des Fahrzeugrads umfasst, wobei die Positioniereinrichtung unabhängig von dem Spannmittel bzw. den Spannmitteln betätigbar ist. Bevorzugt ist diese Positioniereinrichtung derart ausgebildet, dass der Aufsatz auf die Felge des Fahrzeugrades aufgeclipst werden kann. Über die Einrichtung kann der Aufsatz locker zentriert am Fahrzeugrad angebracht werden. Er kann dann beispielsweise über den Befestigungsabschnitt am Fahrzeugrad befestigt werden. Das erste umfängliche Segment kann dann mittels der Spannmittel in seiner endgültigen Position fest mit dem Fahrzeugrad verspannt werden. Das zweite umfängliche Segment kann dann in seine endgültige Konfiguration geklappt werden. Mittels des Montageelements kann das zweite umfängliche Segment dann gegenüber dem ersten umfänglichen Segmente sicher ausgerichtet werden und gegen das Fahrzeugrad gedrängt werden. Die endgültige Befestigung des zweiten umfänglichen Segments kann dann ebenfalls über gegebenenfalls vorhandene Spannmittel erfolgen.

Optional ist, wenn der Aufsatz ein Eingriffselement umfasst, das ausgebildet ist, um den Befestigungsabschnitt und/oder das Montageelement an der Mittenöffnung direkt oder indirekt, vorzugsweise über ein Spannelement, insbesondere über eine Spannschraube , zu befestigen, vorzugsweise, wobei das Eingriffselement einen Eingriffsabschnitt umfasst, der ausgebildet ist, um einen Abschnitt, vorzugsweise eine Nut, der Mittenöffnung formschlüssig zu hintergreifen, vorzugsweise wobei der Eingriffsabschnitt mechanisch aufweitbar oder elastisch schwenkbar ist. Hierdurch kann der Aufsatz einfach am Fahrzeugrad befestigt werden. Bevorzugt ist eine Kombination dieser Ausführung mit den oben genannten Spannmitteln, insbesondere mit den Spannmitteln, die über den Verspannmechanismus mit dem Kontaktabschnitt betätigbar sind.

Optional ist, wenn der Befestigungsabschnitt eine Einrichtung zum klemmenden und/oder hintergreifenden Erfassen einer herkömmlichen Radschraube umfasst, vorzugsweise wobei die Einrichtung eine Klemmhaube mit wenigstens zwei Klemmarmen umfasst und eine Klemmhülse, die wenn sie auf die Klemmhaube aufgeschoben wird, die Klemmarme derart aufeinander zu spannt, dass ein Kopf einer Radschraube durch die Klemmarme greifbar ist, umfasst und einen Bolzen, mit dem die Klemmhülse gegen die Klemmhaube spannbar ist, umfasst. Hierdurch kann der Aufsatz in einfacher Weise am Fahrzeugrad befestigt werden. Bevorzugt ist eine Kombination dieser Ausführung mit den oben genannten Spannmitteln, insbesondere mit den Spannmitteln, die über den Verspannmechanismus mit dem Kontaktabschnitt betätigbar sind.

Im Sinne der vorliegenden Erfindung ist auch ein Aufsatz für ein Fahrzeugrad zur Ermöglichung eines Fahrbetriebs bei eingeschränkter Reifenfunktion, wobei dieser vorzugsweise nach einer oder mehreren der bisher beschriebenen Ausführungsformen ausgebildet sein kann, wobei der Aufsatz einen Grundkörper umfasst, und wobei der Grundköper ein erstes radiales Element und ein zweites radiales Element umfasst, wobei das erste radiale Element ausgebildet ist, um am Fahrzeugrad befestigt zu werden, und wobei das zweite radiale Element ausgebildet ist, um an dem ersten radialen Element in einer Betriebsposition befestigt zu werden, und wobei das zweite radiale Element sich in einem Teil des Umfangs des Aufsatzes in radialer Richtung über das erste radiale Element hinauserstreckt, wenn es an dem ersten radialen Element in der Betriebsposition befestigt ist, vorzugsweise wobei der Teil des Umfangs wenigstens 1/8, insbesondere wenigstens ein 1/4, insbesondere wenigstens eine 1/2, des Gesamtumfangs, vorzugsweise den gesamten Umfang, des Aufsatzes umfasst. Ein derartiger Aufsatz ist also quasi in radialer Richtung mehrteilig aufgebaut. Ein derartiger Aufsatz hat den Vorteil, dass das erste radiale Element in einfacher Weise am Fahrzeugrad bzw. an der Felge des Fahrzeugrads befestigbar ist und in einem weiteren Schritt das zweite radiale Element an dem bereits befestigten ersten radialen Element befestigbar ist.

Optional ist bzw. sind bei dem eben beschriebenen (in radialer Richtung mehrteiligen) Aufsatz an dem ersten radialen Element wenigstens ein Spannmittel, vorzugsweise mehrere Spannmittel, mit einem Hakabschnitt angeordnet, wobei der Hakabschnitt ausgebildet ist, um einen Abschnitt, insbesondere ein Felgenhorn, der Felge des Fahrzeugrads zu hintergreifen. Die Spannmittel können wie weiter oben beschrieben ausgebildet sein. Über die Spannmittel kann das erste radiale Element in vorteilhafter Weise bevorzugt am Felgenhorn befestigt werden.

Optional ist, wenn die Spannmittel eine in axialer Richtung gesehen nach radial innen, vorzugsweise linear oder bogenförmig, abfallende Spannfläche umfassen, wobei die Spannmittel derart ausgebildet sind, dass sich die Spannfläche beim Befestigen und Verspannen des ersten radialen Elements an der Felge nach radial innen bewegt, insbesondere verschiebt, und die Spannfläche derart ausgebildet ist, dass das erste radiale Element beim Befestigen und Verspannen an der Felge des Fahrzeugrads in axialer Richtung zur Felge hin gedrängt wird. Hierdurch

Optional ist, wenn das erste radiale Element und/oder das zweite radiale Element mehrere voneinander lösbare und/oder zueinander beweggliche, vorzugsweise schwenkbare, Teile umfasst. Hierdurch kann der Aufsatz bzw. die einzelnen radialen Elemente zerlegt bzw. kompakt zusammengelegt werden, wodurch der gesamte Aufsatz in einfacher Weise verstaubar ist.

Optional ist, wenn das zweite radiale Element eine Lauffläche des Aufsatzes zur Kontaktierung der Fahrbahn vollständig umfasst.

Vorzugsweise sind die Spannmittel in radialer Richtung verschieblich am ersten radialen Element angeordnet. Damit lässt sich das erste radiale Element auf verschiedene Größen von Felgen anpassen. Optional ist, dass die Spannmittel auf eine radial äußerste Position vorgespannt sind.

Vorzugsweise ist an dem ersten radialen Element eine Betätigungseinrichtung vorgesehen, über die die Spannmittel derart betätigt werden können, dass sie das Felgenhorn der Felge hintergreifen, insbesondere nach radial innen verfahren oder verschwenkt werden, sodass sie das Felgenhorn hintergreifen.

Vorteilhafterweise umfasst die Betätigungseinrichtung eine Seilzugeinrichtung, die vorzugsweise eine Trommeleinrichtung zum Aufwickeln des Seilzugs umfasst, wobei über die Seilzugeinrichtung vorzugsweise sämtliche Spannmittel miteinander gekoppelt sind und die Spannmittel hierdurch, vorzugsweise gleichförmig, bewegbar sind.

Bevorzugt ist auch, wenn das erste radiale Element im Bereich des Lochkreises über eine Schraubverbindung an der Felge befestigbar ist. Bevorzugt ist, wenn zusätzlich hierzu die oben erwähnten Spannmittel am ersten radialen Element vorgesehen sind.

Die am ersten radialen Element angeordneten Spannmittel können auch über eine Hebeleinrichtung bewegbar oder verschwenkbar sein.

Nachfolgend wird die Montage des in radialer Richtung mehrteilig aufgebauten Aufsatzes kurz skizziert. Zunächst wird das erste radiale Element im Bereich des Lochkreises verschraubt. Hierzu kann beispielsweise eine der ursprünglichen Radschrauben durch eine oder mehrere Sonderschraube(n) ersetzt werden, die verlängert und mit einem dem Aufsatz zugewandten Gewinde ausgestattet ist.

Über das Aufschrauben einer entsprechenden Mutter auf das dem Aufsatz zugewandte Gewinde kann der Aufsatz damit am Fahrzeugrad angebracht werden. Danach können die Spannmittel in Hintergriff mit dem Felgenhorn gebracht werden. Es ist auch möglich, dass das erste radiale Element derart ausgebildet ist, dass es lediglich mittels der Spannmittel am Felgenhorn befestigt wird. Nachdem das erste radiale Element am Fahrzeugrad befestigt ist, kann das zweite radiale Element an dem ersten radialen Element befestigt werden. Vorzugsweise weisen die beiden radialen Elemente hierzu entsprechend ausgebildete Verschraubungseinrichtungen auf. Bevorzugt ist, wenn das zweite radiale Element mehrteilig ausgebildet ist. Beispielsweise kann ein erster Teil des zweiten radialen Elements auf einer der Fahrbahn abgewandten Seite am ersten radialen Element befestigt werden. Das Fahrzeugrad anschließend so gedreht werden, dass der bereits am ersten radialen Element befestigte Teil des zweiten radialen Elements in Kontakt mit der Fahrbahn kommt und dann das weitere Teil bzw. die weiteren Teile des zweiten radialen Elements am ersten radialen Element befestigt werden können, ohne dass die Fahrbahn hierbei im Weg wäre.

Weitere Merkmale, Anwendungsmöglichkeiten und Vorteile der Erfindung ergeben sich aus der nachfolgenden Beschreibung von Ausführungsbeispielen der Erfindung, die anhand der Zeichnung erläutert werden, wobei die Merkmale sowohl in Alleinstellung als auch in unterschiedlichen Kombinationen für die Erfindung wesentlich sein können, ohne dass hierauf nochmals explizit hingewiesen wird. Es zeigen:
- Figur 1: ein Fahrzeugrad beim Blick in einer axialen Richtung;
- Figur 2: eine Schnittdarstellung der Felge des Fahrzeugrads aus Figur 1;
- Figur 3: eine erste Ausführungsform eines erfindungsgemäßen Aufsatzes in perspektivischer Darstellung mit Blick auf seine der Felge abgewandte Seite;
- Figur 4: der Aufsatz aus Figur 3 in perspektivischer Darstellung mit Blick auf seine der Felge zugewandte Seite;
- Figur 5: ein Spannmittel des Aufsatzes aus Figur 3 und 4 im Hintergriff mit der Felge;
- Figur 6: einen Teil von Figur 5 in vergrößerter Darstellung;
- Figur 7: eine Aufsatzbefestigungsschraube;
- Figur 8: eine weitere Ausführungsform eines erfindungsgemäßen Aufsatzes in einer schematischen Darstellung;
- Figur 9: eine weitere Ausführungsform eines erfindungsgemäßen Aufsatzes in einer schematischen Darstellung;
- Figur 10: eine weitere Ausführungsform eines erfindungsgemäßen Aufsatzes in einer schematischen Darstellung;
- Figur 11: eine weitere Ausführungsform eines erfindungsgemäßen Aufsatzes in einer schematischen Darstellung;
- Figur 12: eine weitere Ausführungsform eines erfindungsgemäßen Aufsatzes in einer schematischen Darstellung;
- Figur 13: ein Eingriffselement eines Montageelements;
- Figur 14: das Eingriffselement aus Figur 13 im in einer Mittenöffnung eingreifenden Zustand;
- Figur 15: ein Aufsatz, der über das Eingriffselement an einer Felge befestigt ist;
- Figur 16: ein Aufsatz, der ähnlich dem Aufsatz aus Figur 10 aufgebaut ist;
- Figur 17: ein erfindungsgemäßer Aufsatz mit Verspannmechanismus;
- Figur 18: eine alternative Ausgestaltung eines Verspannmechanismus;
- Figur 19: eine alternative Ausgestaltung eines Verspannmechanismus;
- Figur 20: eine alternative Ausgestaltung eines Verspannmechanismus;
- Figur 21: eine alternative Ausgestaltung eines Verspannmechanismus;
- Figur 22: eine alternative Ausgestaltung eines Aufsatzes mit Verspannmechanismus;
- Figur 23: der Verspannmechanismus des Aufsatzes aus Figur 22 im Detail;
- Figur 24: der Verspannmechanismus des Aufsatzes aus Figur 22 im Detail;
- Figur 25: eine Einrichtung zum klemmenden Erfassen einer herkömmlichen Radschraube;
- Figur 26: eine alternative Ausführungsform einer Einrichtung zum klemmenden Erfassen einer herkömmlichen Radschraube;
- Figur 27: eine Einrichtung zum hintergreifenden Erfassen einer angepassten Radschraube;
- Figur 28: eine alternative Einrichtung zum hintergreifenden Erfassen einer angepassten Radschraube;
- Figur 29: ein Aufsatz, der über Spezialbolzen am Fahrzeugrad angebracht ist;
- Figur 30: ein Aufsatz mit einer Betätigungseinrichtung für ein Spannmittel;
- Figur 31: eine alternative Ausführungsform eines erfindungsgemäßen Aufsatzes;
- Figur 32: ein erstes radiales Element des Aufsatzes aus Figur 31 bzw. Abschnitte des ersten radialen Elements;
- Figur 33: eine alternative Ausführungsform des ersten radialen Elements;
- Figur 34: mehrere Aufsatzbefestigungsschrauben zur Verwendung mit Stehbolzen;
- Figur 35: mehrere Aufsatzbefestigungsschrauben zum Ersatz herkömmlicher Radschrauben; und
- Figur 36: ein Montageelement.

In den folgenden Figuren tragen sich entsprechende Bauteile und Elemente gleiche Bezugszeichen. Der besseren Übersichtlichkeit wegen sind nicht in allen Figuren sämtliche Bezugszeichen wiedergegeben.

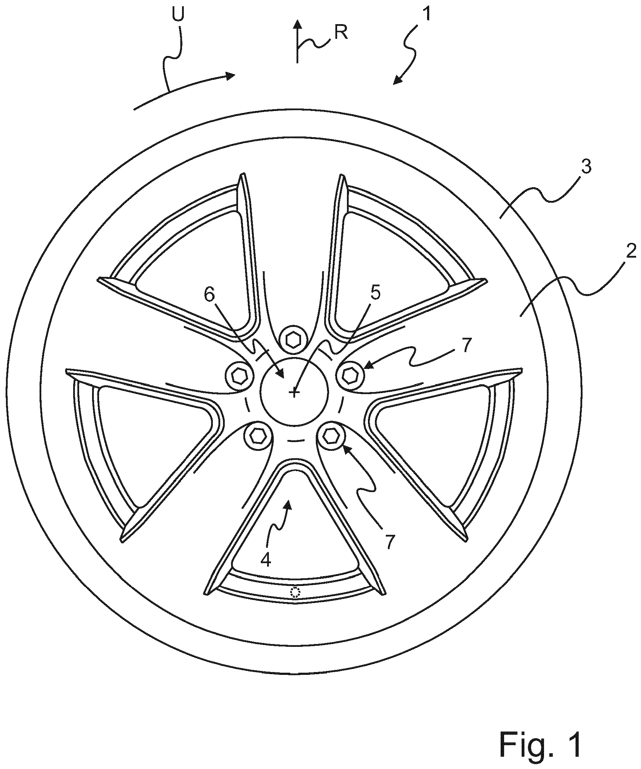

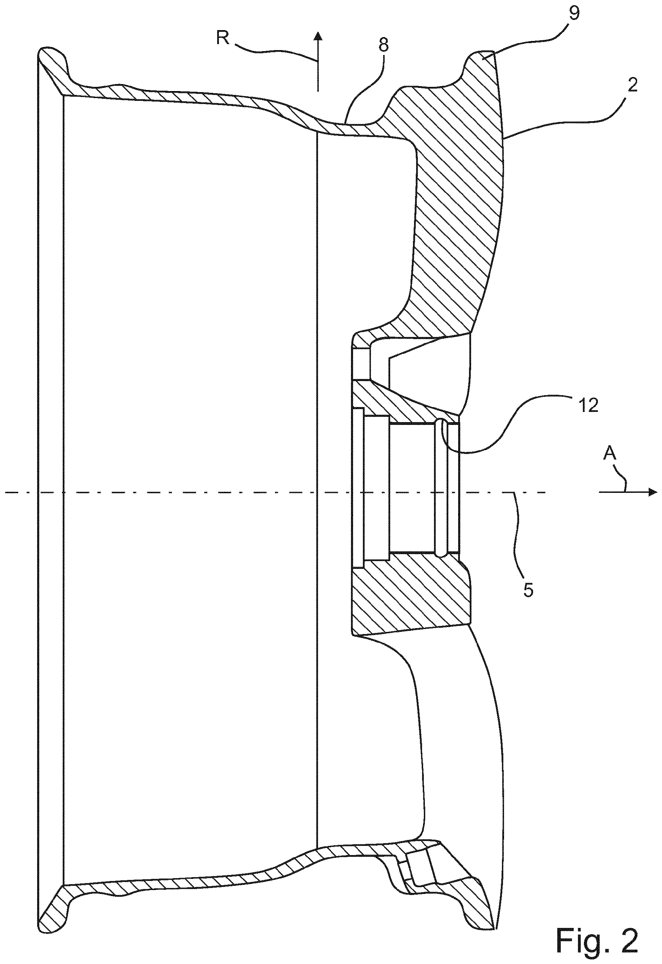

Figur 1 zeigt in schematischer Darstellung ein Fahrzeugrad 1. das Fahrzeugrad 1 umfasst eine Felge 2 und einen auf der Felge 2 angebrachten Reifen 3. Eine Umfangsrichtung ist durch einen Pfeil mit dem Bezugszeichen U dargestellt. Eine axiale Richtung ist durch einen Pfeil mit dem Bezugszeichen A dargestellt (Figur 2). Eine radiale Richtung ist durch einen Pfeil mit dem Bezugszeichen R dargestellt. Radial innenliegend umfasst die Felge 2 einen Lochkreis 4 des Fahrzeugrads 1. Im Zentrum des Lochkreises 4 ist um eine entlang der axialen Richtung A verlaufenden Drehachse 5 des Fahrzeugrads 1 eine sogenannte Mittenöffnung 6, die teilweise auch als Nabenbohrung oder Mittellochzentrierung bezeichnet wird, angeordnet. Der Lochkreis 4 umfasst vorliegend fünf Schraubenlöcher 7, von denen zwei mit einem Bezugszeichen versehen sind.

Die Felge 2 ist in Figur 2 ohne Reifen 3 dargestellt. Die Felge 2 umfasst ein Felgenbett 8 und ein Felgenhorn 9 und die Mittenöffnung 6 weist eine vertiefte umlaufende Nut 12 auf.

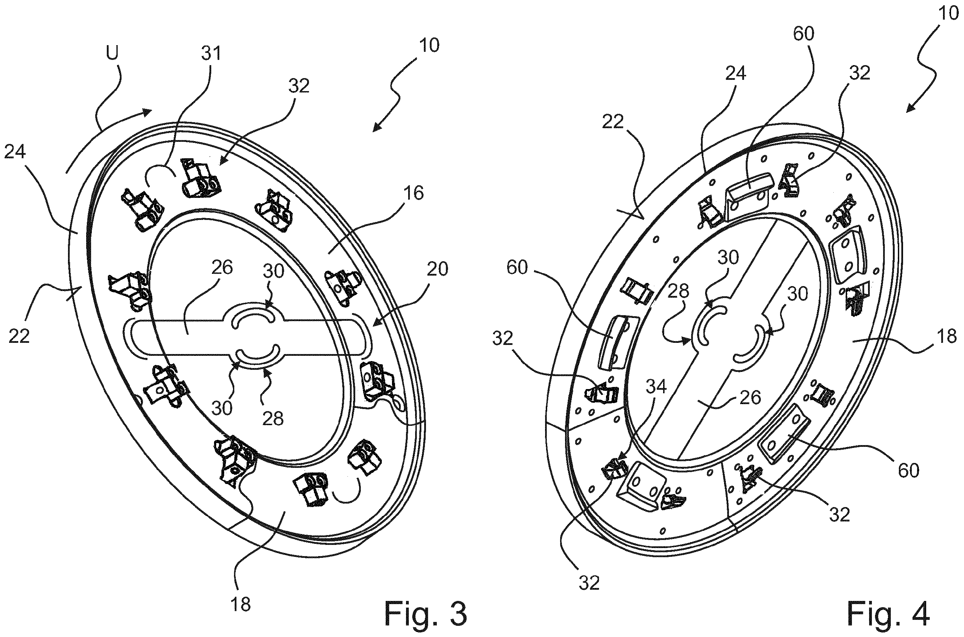

Figur 3 zeigt einen erfindungsgemäßen Aufsatz 10 beispielsweise für das Fahrzeugrad 1 aus Figur 1. Der Aufsatz 10 umfasst ein erstes umfängliches Segment 16, das kreisbogenartig ausgebildet ist und eine umfängliche Erstreckung von ca. 270° aufweist, und ein zweites umfängliches Segment 18, das ebenfalls kreisbogenartig ausgebildet ist und eine umfängliche Erstreckung von ca. 90° aufweist. Vorliegend bilden das erste umfängliche Segment 16 und das zweite umfängliche Segment 18 einen Grundkörper 20 des Aufsatzes 10.

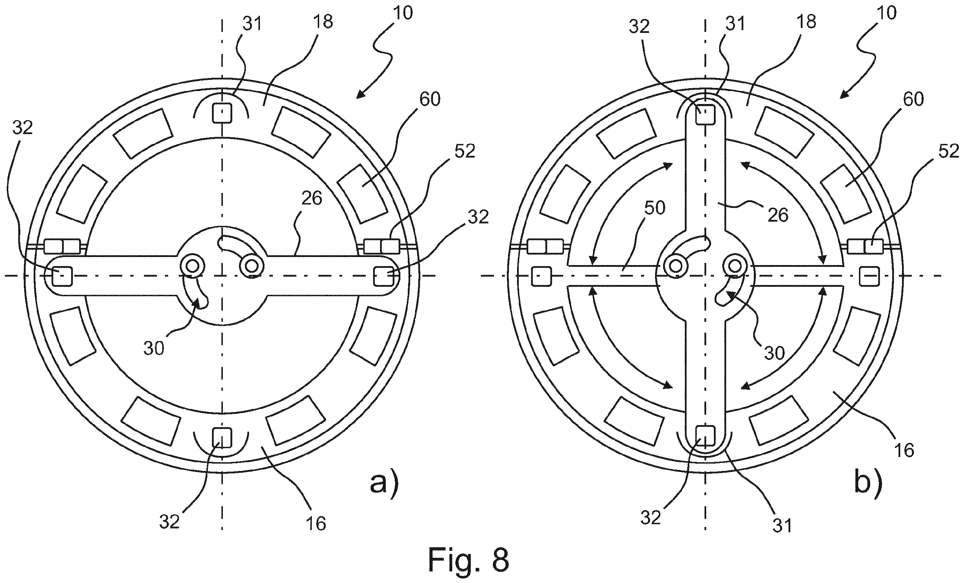

Bei der Ausführungsform von Figur 3 und 4 ist das zweite umfängliche Segment 18 von dem ersten umfänglichen Segment 16 lösbar. Im Sinne der Erfindung sind jedoch auch Ausführungsformen bei denen das zweite umfängliche Segment 18 klapp- oder schwenkbar an dem ersten umfänglichen Segment 16 angebracht ist (bspw. Figuren 8 bis 10).

Bevorzugt ist, wenn das zweite umfängliche Segment eine umfängliche Erstreckung von wenigstens 45°, vorzugsweise wenigstens 60°, vorzugsweise wenigstens 90°, insbesondere wenigstens 120°, insbesondere wenigstens 150°, aufweist.

Bevorzugt ist, wenn das erste umfängliche Segment eine umfängliche Erstreckung von mehr als 180°, vorzugsweise von mehr als 190°, insbesondere von mehr als 195°, aufweist.

Im Betriebszustand des Aufsatzes 10 weist der Grundkörper eine kreisringförmige Lauffläche 22 auf. Die Lauffläche 22 ist durch einen Laufflächenkörper 24 gebildet. Der Laufflächenkörper 24 ist generell, also nicht auf das vorliegende Ausführungsbeispiel beschränkt, vorzugsweise unter Verwendung eines elastischen Polymermaterials hergestellt. Vorzugsweise umfasst der Laufflächenkörper 24 auch innere Hohlräume, die Elastizität Beziehung Dämpfungsvermögen des Laufflächenkörpers 24 erhöhen.

Der Aufsatz 10 weist ein Montageelement 26 auf. In Figur 3 ist das Montageelement 26 außerhalb einer Montageposition gezeigt. In Figur 4 gegen findet sich das Montageelement 26 in der Montageposition.

In der Montageposition richtet das Montageelement 26 das zweite umfängliche Segment 18 gegenüber dem ersten umfänglichen Segment 16 aus und drängt das zweite umfängliche Segment 18 gegen die Felge 2 des Fahrzeugrads 1, wenn das erste umfängliche Segment 16 am Fahrzeugrad 1 befestigt ist.

Das Montageelement 26 ist in der Ausführungsform von Figur 3 und 4 stabartig ausgebildet, wobei es sich in der Montageposition vom ersten umfänglichen Segment 16 über den Lochkreis 4 bzw. die Position des Lochkreises 4, wenn der Aufsatz 10 am Fahrzeugrad 1 befestigt ist, zum zweiten umfänglichen Segment 18 erstreckt (siehe Figur 2).

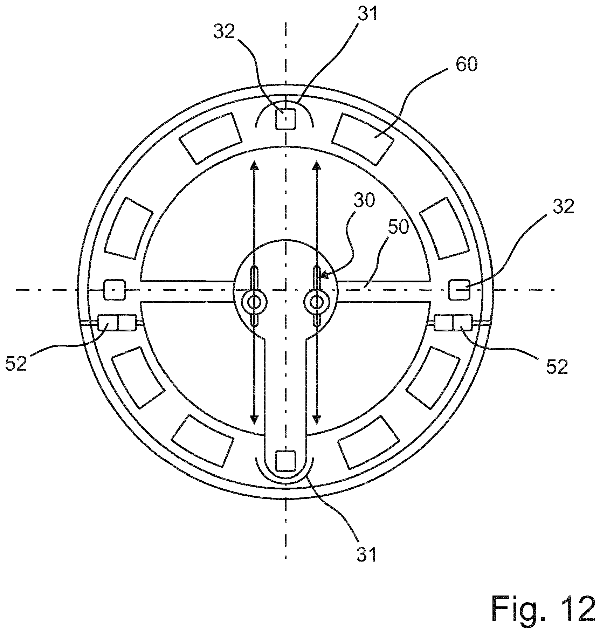

In dem Bereich, in dem das Montageelement 26 über dem Lochkreis 4 liegt weist das Montageelement einen erweiterten Abschnitt 28 auf. In dem erweiterten Abschnitt 28 weist das Montageelement 26 zwei als gekrümmte Langlöcher 30 ausgebildete Schraubenaufnahmen 30 auf. Durch die Langlöcher 30 ist das Montageelement 26 gegenüber dem ersten bzw. zweiten umfänglichen Segment 16, 18 verschwenkbar, auch wenn sich Schrauben in den Langlöchern 30 befinden. Wie das Montageelement 26 über Schrauben in den Langlöchern 30 montiert werden kann wird später wird später noch im Detail erläutert. Eine verschiebbare Ausbildung des Montageelements 26 ist ebenso denkbar und im Sinne der vorliegenden Erfindung (Siehe bspw. Figur 12).

An dem ersten umfänglichen Segment 16 und an dem zweiten umfänglichen Segment 18 sind Sicherungseinrichtungen 31 für das Montageelement 26 angeordnet. Die Sicherungseinrichtungen 31 sind in Figur 3 schematisch dargestellt und dienen dazu, die Position des Montageelements 26 in Umfangsrichtung U gegenüber dem ersten umfänglichen Segment 16 bzw. dem zweiten umfänglichen Segment 18 festzulegen.

Die als Langlöcher ausgebildeten Schraubenaufnahmen 30 des Montageelements 26 entsprechen jedenfalls einem Teil dem Lochmusters des Lochkreises 4 des Fahrzeugrades 1. Damit ist gemeint, dass wenigstens zwei Schrauben, die im Lochmuster des Lochkreises 4 eingebracht werden derart angeordnet sind, dass sie sich in axialer Richtung A gesehen im Bereich der Schraubenaufnahmen 30 befinden, eine entsprechende Schraube durch sie also hindurchgeführt werden kann.

An dem ersten umfänglichen Segment 16 und an dem zweiten umfänglichen Segment 18 sind jeweils mehrere Spannmittel 32, mit einem Hakabschnitt 34 angeordnet, wobei der Hakabschnitt 34 ausgebildet ist, um in einem Betriebszustand des Aufsatzes 10 ein Felgenhorn 9 der Felge 2 des Fahrzeugrads 1 zu hintergreifen.

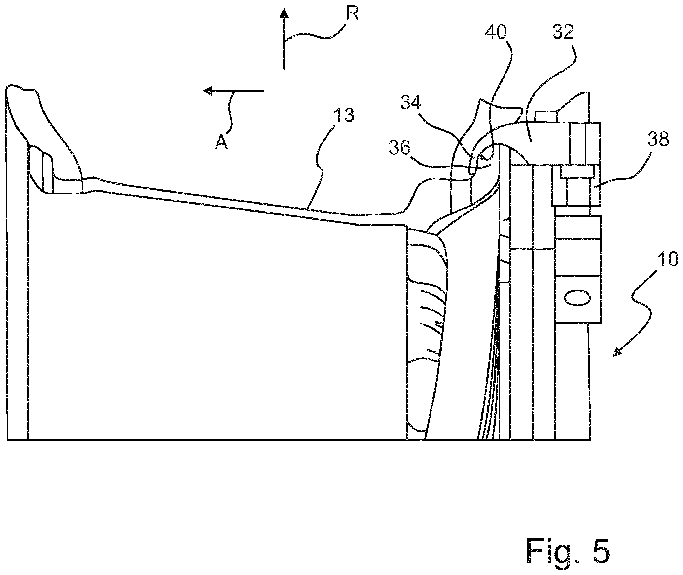

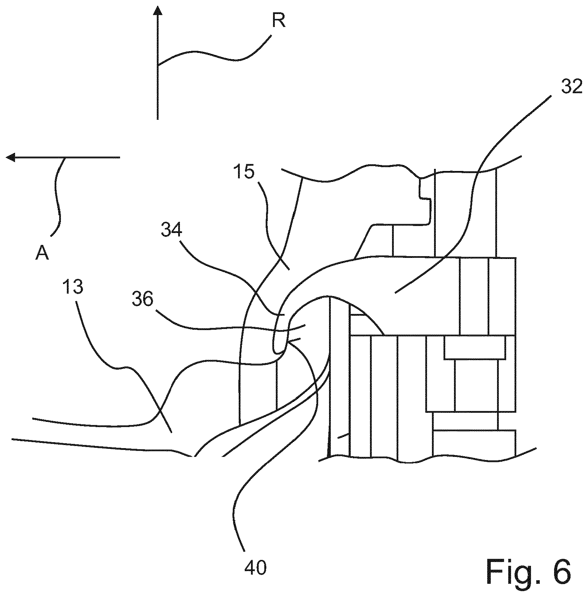

Dieses Hintergreifen des Felgenhorns 9 der Felge 2 ist in Figur 5 und vergrößert in Figur 6 illustriert.

Die Spannmittel 32 können beispielsweise, wie in Figur 5 gezeigt, an Halteböcken 38 lösbar und beweglich befestigt sein. Die Spannmittel 32 können jedoch auch eine Aufnahmeeinrichtung für einen Hebel umfassen, sodass sie über einen entsprechenden Hebel auf das Felgenhorn 9 geschwenkt werden können und dort vorzugsweise eingerastet werden können. Vorteilhafterweise sind die Spannmittel 32 derart ausgebildet, dass sie nach Verspannung an der Felge 2 im Aufsatz 10 versenkt angeordnet sind.

Die Spannmittel 32 umfassen eine in axialer Richtung A gesehen nach radial innen bogenförmig abfallende Spannfläche 40. Die Spannmittel 32 sind dabei derart ausgebildet, dass sich die Spannfläche 40 beim Befestigen und Verspannen des Aufsatzes 10 an der Felge 2 nach radial innen bewegt und die Spannfläche 40 ist derart ausgebildet, dass der Aufsatz 10 beim Befestigen und Verspannen an der Felge 2 des Fahrzeugrads 1 in axialer Richtung A zur Felge 2 hin gedrängt wird.

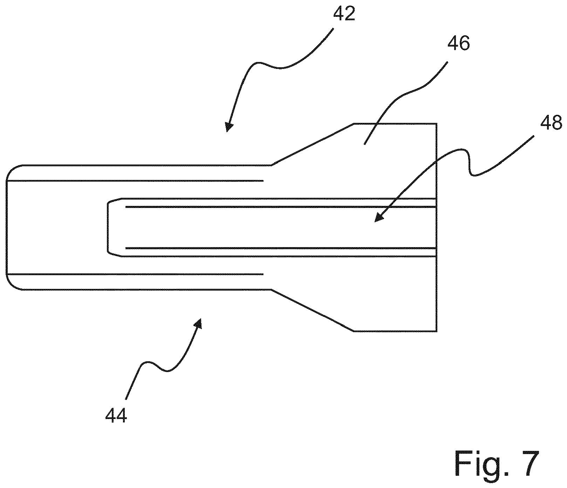

Figur 7 zeigt eine Aufsatzbefestigungsschraube 42. die Aufsatzbefestigungsschraube 42 ist in ihrem vorderen Bereich mit einem Gewinde 44 versehen, dass dem Gewinde einer herkömmlichen Schraube zur Befestigung des Fahrzeugrades 1 entspricht. Im Bereich des Kopfes 46 weist die Aufsatzbefestigungsschraube 42 ein Innengewinde 48 auf.

Für die Montage des Aufsatzes 10 kann eine standardmäßige Befestigungsschraube des Fahrzeugrades 1 zunächst entfernt werden und durch eine Aufsatzbefestigungsschraube 42 mit dem Innengewinde 48 in ihrem Kopf 46 ersetzt werden. In dieses Innengewinde 48 im Kopf 46 der Aufsatzbefestigungsschraube 42 kann dann eine weitere Schraube (nicht gezeigt) eingeschraubt werden, über die das Montageelement 26 am Fahrzeugrad 1 befestigt werden kann. Die weitere Schraube erstreckt sich dabei durch die Langlöcher 30, sodass durch ein Lockern der weiteren Schraube eine Verschwenkbarkeit des Montageelements 26 gegeben ist.

Die Figuren 8-11 zeigen alternative Ausführungsformen des Aufsatzes 10. Bei den in den Figuren 8-11 gezeigten Ausführungsformen weist jeweils das erste umfängliche Segment 16 einen Befestigungsabschnitt 50 auf. Der Befestigungsabschnitt 50 erstreckt sich jeweils kreissehnenartig über den Bereich des Lochkreises des Fahrzeugrades 1.

Das zweite umfängliche Segment 18 ist jeweils über zwei Scharniereinrichtungen 52 schwenkbar am ersten umfänglichen Segment 16 angebracht. Die umfängliche Erstreckung der kreisbogenartig ausgebildeten ersten umfänglichen Segmente 16 ist jeweils etwas über 190°.

In den jeweils mit a) bezeichneten Figuren 8 bis 11 ist das Montageelement 26 aus der Montageposition heraus geschwenkt. In den jeweils mit b) bezeichneten Figuren 8 bis 11 ist das Montageelement 26 in der Montageposition gezeigt.

Die Ausführungsformen der Figuren 8-10 unterscheiden sich jeweils lediglich durch die Ausbildung des Montageelements 26. In der Ausführungsform gemäß Figur 8 ist das Montageelement 26 stabartig ausgebildet und erstreckt sich im Montagezustand (Figur 8b) vom ersten umfänglichen Segment 16 über den Bereich des Lochkreises 4 zum zweiten umfänglichen Segment 18. Das Montageelement 26 ist dabei verschwenkbar an den Befestigungsabschnitt 50 gelagert.

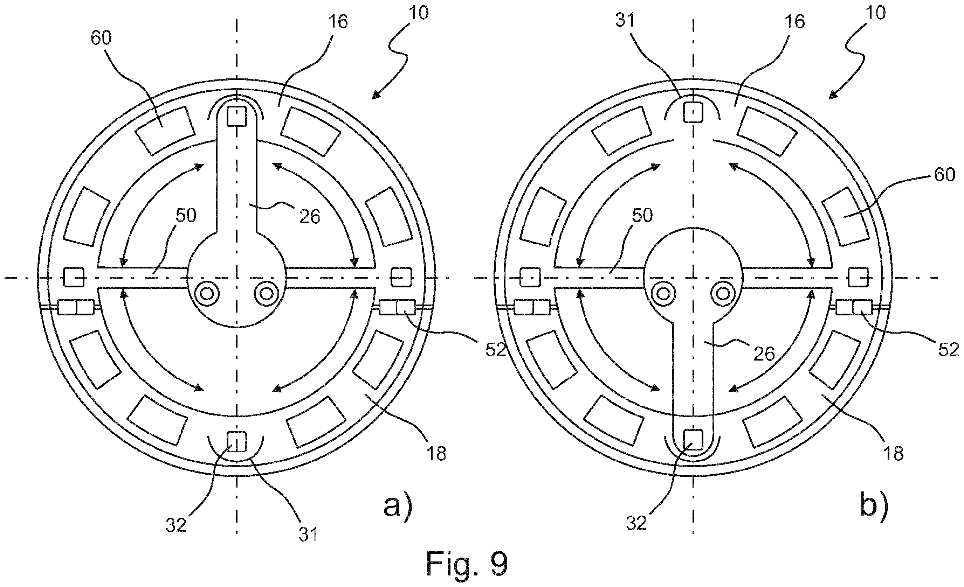

Bei der Ausführungsform gemäß Figur 9 ist das Montageelement 26 ebenso stabartig ausgebildet. Das Montageelement 26 von Figur 9 ist jedoch kürzer als das von Figur 8 ausgebildet, sodass es sich im Montagezustand vom Bereich des Lochkreises 4 zum zweiten umfänglichen Segment 18 erstreckt. Das Montageelement 26 ist dabei ebenso verschwenkbar an den Befestigungsabschnitt 50 gelagert, wodurch es bei am Fahrzeugrad 1 befestigtem ersten umfänglichen Segment 16 das zweite umfängliche Segment 18 gegenüber dem ersten umfänglichen Segment 16 ausrichten kann und gegen die Felge 2 des Fahrzeugrads 1 drängt.

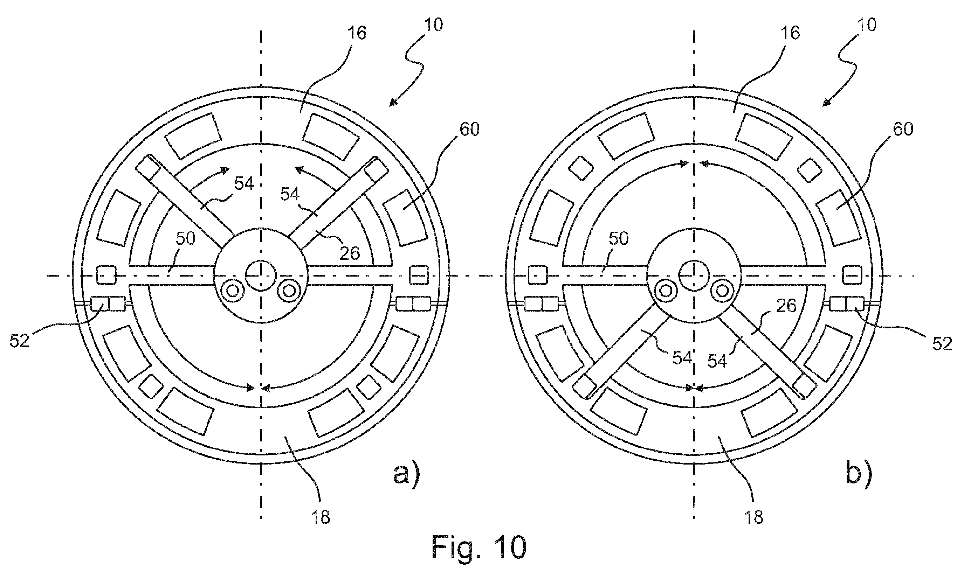

Bei der Ausführungsform von Figur 10 ist das Montageelement 26 V-förmig ausgebildet ist, wobei sich zwei Schenkel 54 des Montageelements 26 in der Montageposition vom Bereich des Lochkreises 4 bis zum zweiten umfänglichen Segment 18 erstrecken

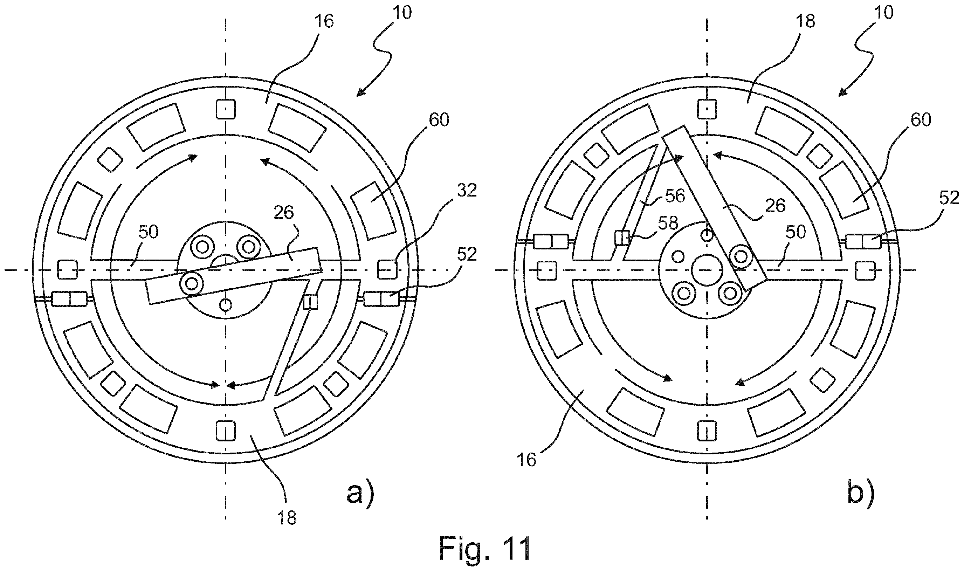

Bei der in Figur 11 gezeigten Ausführungsform umfasst das zweite umfängliche Segment 18 einen Stützabschnitt 56, der verhindert, dass das azentrisch im Bereich des Lochkreises 4 gelagerte Montageelement 26 bei unsachgemäßer Bedienung unter das zweite umfängliche Segment 18 gedrückt wird. Der Stützabschnitt 56 ist starr mit dem zweiten umfänglichen Segment 18 verbunden und ist über ein weiteres Scharnier 58 schwenkbar gegenüber dem Befestigungsabschnitt 50 gelagert.

Bei der in Figur 12 gezeigten Ausführungsform ist das Montageelement 26 im Bereich des Lochkreises 4 mittels der Langlöcher 30 verschieblich gelagert.

Vorzugsweise sind die Sicherungseinrichtungen 31 im Bereich der Spannmittel 32 angeordnet.

Die Aufsätze 10 können Positioniereinrichtungen 60 umfassen. Derartige Positioniereinrichtungen 60 dienen, zur zentrierten Positionierung des Aufsatzes an der Felge 2 des Fahrzeugrades 1, wobei die Positioniereinrichtung 60 vorzugsweise unabhängig den Spannmitteln 32 betätigbar ist.

Bevorzugt sind derartige Positioniereinrichtungen 60 derart ausgebildet, dass der Aufsatz 10 auf die Felge 2 des Fahrzeugrades 1 aufgeclipst werden kann. Über die Positioniereinrichtungen 60 kann der Aufsatz 10 locker und zentriert am Fahrzeugrad 1 angebracht werden.

Wie auch bei einem Aufsatz 10, der keine Positioniereinrichtung 60 umfasst, kann der Aufsatz 10 bzw. zunächst das erste umfängliche Segment 16 dann beispielsweise über den Befestigungsabschnitt 50 am Fahrzeugrad befestigt werden, beispielsweise über Verschraubung des Befestigungsabschnitts 50 mittels Aufsatzbefestigungsschrauben 52 im Bereich des Lochkreises 4. Die Befestigung des ersten umfänglichen Segments erfolgt im oberen Bereich des Fahrzeugrads 1, sodass das Fahrzeugrad 1 nicht vom Fahrzeug abgenommen werden muss und das erste umfängliche Segment 16 dennoch nicht in Kontakt mit der Fahrbahn gerät. Denkbar ist jedoch auch eine vorübergehende Befestigung über andere externe Mittel zur Befestigung, beispielsweise über einen Spanngurt. Das erste umfängliche Segment 16 kann dann mittels der Spannmittel 32 in seiner endgültigen Position fest mit dem Fahrzeugrad 1 verspannt werden. Das Fahrzeug wird daraufhin um eine halbe Raddrehung bewegt. Nun ist das erste umfängliche Segment 16 im unteren Bereich des Fahrzeugrads 1 und in Kontakt mit der Fahrbahn. Das zweite umfängliche Segment 18 kann dann in seine endgültige Konfiguration geklappt werden oder, bei einer Ausführungsform wie in Figur 3 und 4 gezeigt, eingesetzt werden. Mittels des Montageelements 26 kann das zweite umfängliche Segment 18 dann gegenüber dem ersten umfänglichen Segmente 16 sicher ausgerichtet werden und gegen das Fahrzeugrad 1 gedrängt werden. Die endgültige Befestigung des zweiten umfänglichen Segments 18 kann dann ebenfalls über gegebenenfalls vorhandene Spannmittel 32 erfolgen.

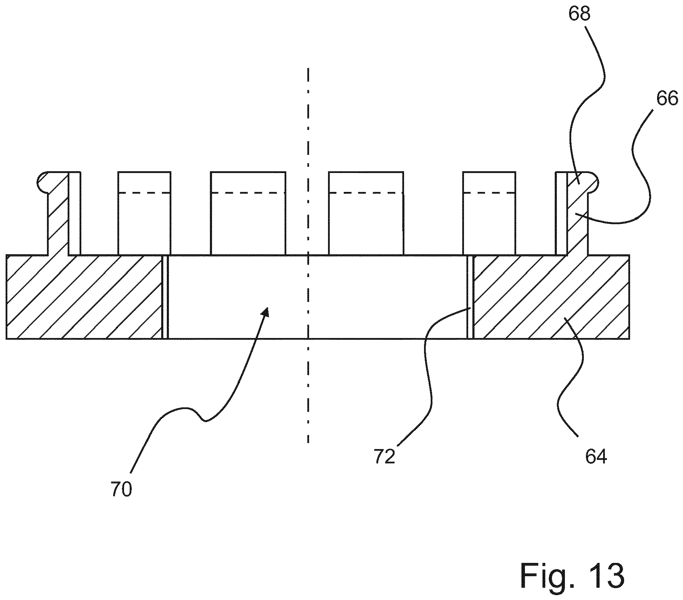

In den Figuren 13-15 ist eine weitere Ausführungsform des erfindungsgemäßen Aufsatzes 10 illustriert.

Bei diesem Aufsatz ist das Montageelement 26 derart ausgebildet, dass es nicht in den Schraubenlöchern 7 des Lochkreises 4 eingeschraubt wird, sondern über die Mittenöffnung 6 befestigt wird.

Hierzu umfasst das Montageelement 26 ein in Figur 13 gezeigtes Eingriffselement 64. Das Eingriffselement 64 weist vorliegend nachgiebig ausgebildete Finger 66 auf, die jeweils einen Eingriffsabschnitt 68 umfassen, der ausgebildet ist, um in die umlaufende Nut 12 der Mittenöffnung 6 einzugreifen. Das Eingriffselement 64 weist eine zentrale Öffnung 70 mit einem Innengewinde 72 auf.

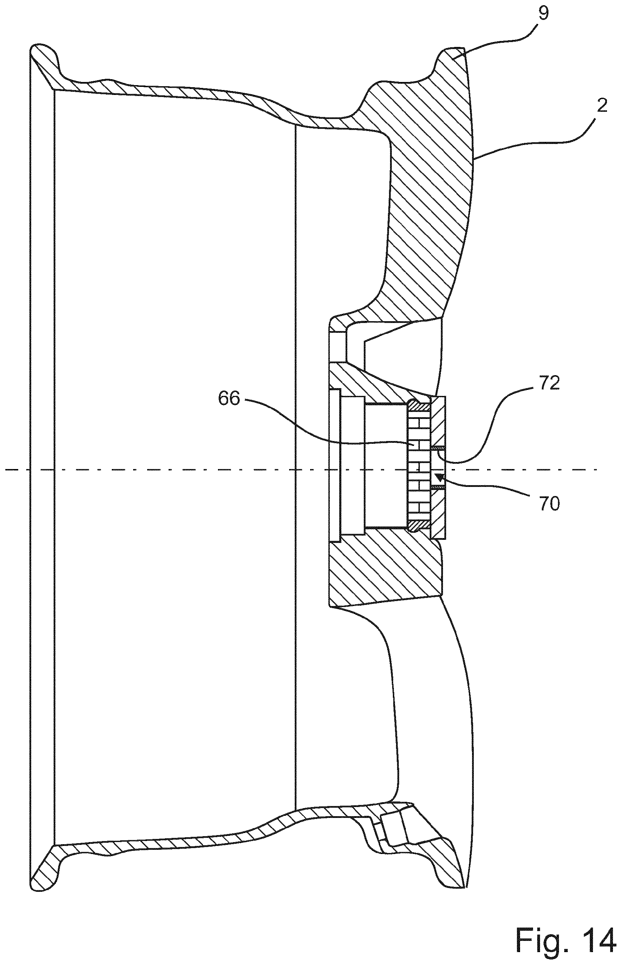

Das Eingriffselement 64 kann in die Mittenöffnung 6 eingeclipst werden. Dieser eingeclipste Zustand ist in Figur 14 dargestellt.

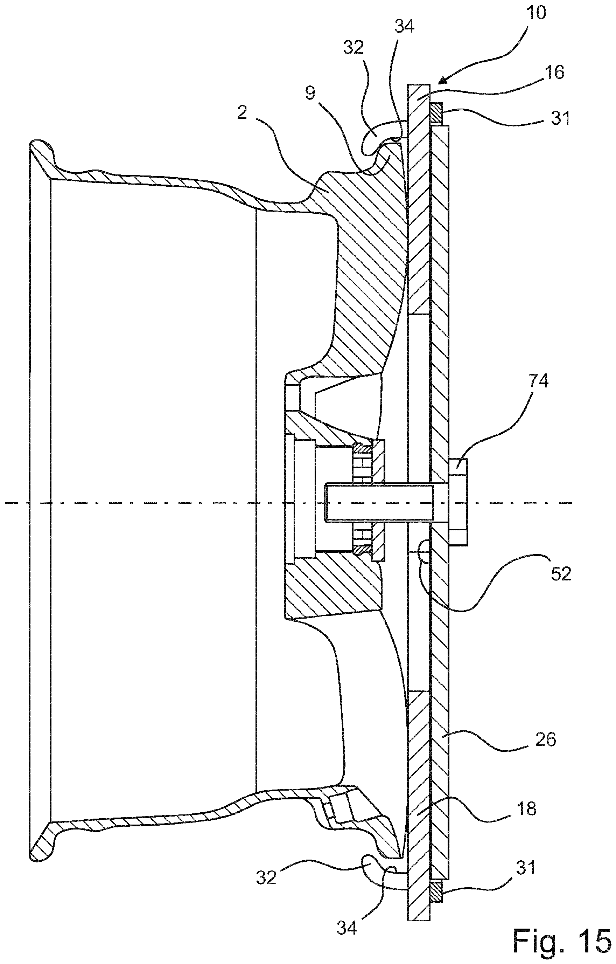

In einem nächsten Schritt kann der Aufsatz 10, bzw. dessen erstes umfängliches Segment 16 an der Felge 2 mittels des Montagelements 26 befestigt werden. Hierzu wird das Montageelement 26 über eine Spannschraube 74, eine Ausführungsform eines Spannelements 74 darstellt, gegen das Eingriffselement 64 gespannt (Figur 15). Generell ist mit einem Spannelement ein Element gemeint, mit dem das Montageelement 26 bzw. der Befestigungsabschnitt 50 gegen das Eingriffselement 64 gezogen bzw. gespannt werden kann. Anschließend werden die Spannmittel 32 derart betätigt, dass sie das Felgenhorn 9 hintergreifen. Über die Spannflächen 34 wird dabei der Aufsatz 10 bzw. das erste umfängliche Segment 16 in Richtung der Felge 2 gedrängt. Anschließend wird das zweite umfängliche Segment 18 heruntergeklappt. Die Spannschraube 74 wird gelöst. Das Montageelement 26 wird in die Montageposition bewegt, sodass es das zweite umfängliche Segment 18 gegenüber dem ersten umfänglichen Segment 16 ausrichtet und gegen die Felge 2 des Fahrzeugrads 1 drängt. Dieser Zustand ist in Figur 15 gezeigt. Anschließend werden die Spannmittel 32 am zweiten umfänglichen Segment 18 betätigt, sodass sie ebenfalls das Felgenhorn 9 hintergreifen.

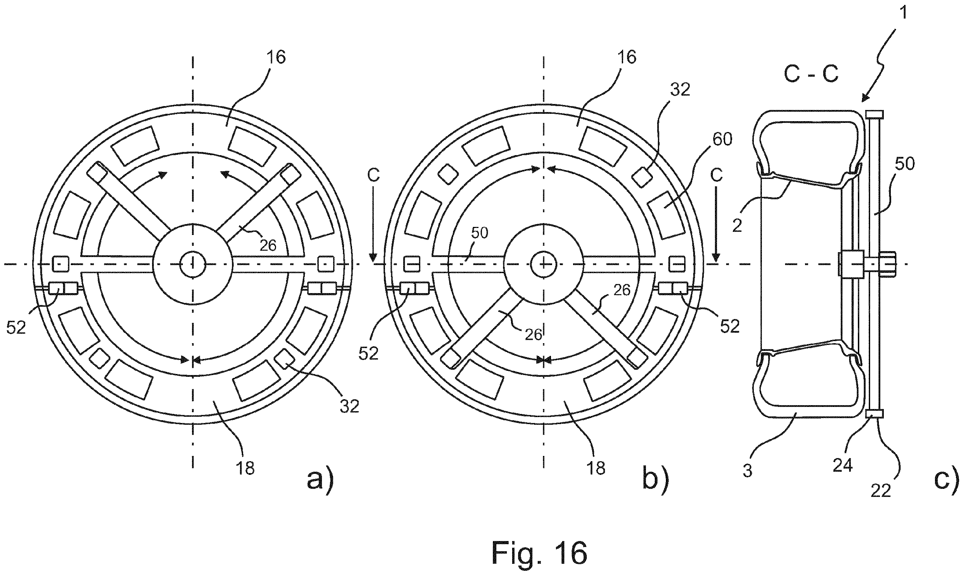

Wie in Figur 16 illustriert, kann eine derartige Befestigung über die Mittenöffnung 6 auch zur Befestigung des Befestigungsabschnitts 50 verwendet werden. Die Ausführungsform gemäß Figur 16 entspricht ansonsten der Ausführungsform gemäß Figur 10.

Eine Befestigung über die Mittenöffnung 6 ist jeweils für den Befestigungsabschnitt 50 als auch für das Montageelement 26 prinzipiell mittels eines Eingriffselements 64 möglich, das anders als das Eingriffselement 64 der Figuren 13-15 ausgebildet ist. Das Eingriffselement 64 kann beispielsweise direkt, also ohne eine Spannschraube 74 mit dem Befestigungsabschnitt 50 als auch mit dem Montageelement 26 verbindbar sein. Das Eingriffselement 64 kann ausgebildet sein, um einen Abschnitt der Mittenöffnung 6 formschlüssig zu hintergreifen. Ein derartiger formschlüssiger Hintergriff kann beispielsweise über die elastisch verschwenkbaren bzw. verbiegsamen Finger 66 gebildet sein. Denkbar ist jedoch auch eine Ausführungsform, bei der ein Eingriffsabschnitt 68, beispielsweise durch eine Madenschraube, aufweitbar ist, und hierdurch in der Mittenöffnung 6 verspannbar ist.

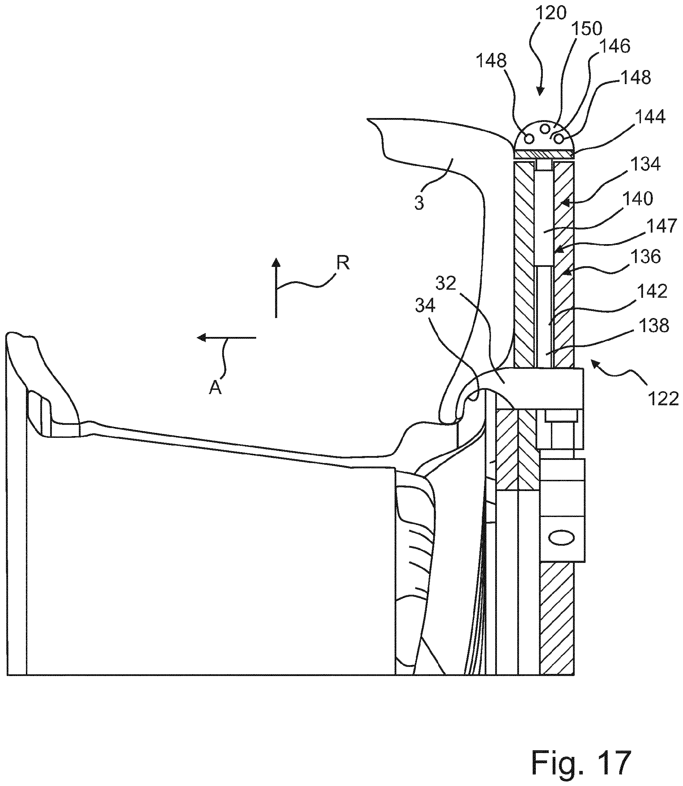

In Figur 17 ist der Hintergriff der Spannmittel 32 mit dem Felgenhorn 9, an einer weiteren erfindungsgemäßen Ausführungsform illustriert. Die Ausführungsform von Figur 17 umfasst Spannmittel 32, die ausgebildet sind, um mit ihrem Hakabschnitt 34 einen Abschnitt 9, insbesondere ein Felgenhorn 9, einer Felge 2 des Fahrzeugrads 1 zu hintergreifen. Der Aufsatz 10 umfasst einen Verspannmechanismus 122 mit einem Kontaktabschnitt 120, der ausgebildet ist, um das Spannmittel 32 zu betätigen und den Hakabschnitt 34 in Hintergriff mit dem Abschnitt 9 der Felge 2, vorliegend dem Felgenhorn 9, zu bringen, wenn der Kontaktabschnitt 120, betätigt, insbesondere mit Druck beaufschlagt, wird. Der Aufsatz umfasst des Weiteren eine Druckübertragungseinrichtung 134 mit einer Freilaufeinrichtung 136. Die Freilaufeinrichtung 136 umfasst einen Druckzylinder 138 mit einem ersten Zylinderteil 140 und einem zweiten Zylinderteil 142. Die Spannmittel 32 sind über die Kontaktabschnitte 120 derart betätigbar, dass sie bei Betätigung einen Abschnitt 9, vorliegend das Felgenhorn 9, der Felge 2 hintergreifen. Das Spannmittel 32 ist mit dem ihm zugeordneten Kontaktabschnitt 120 über die Freilaufeinrichtung 136 mechanisch gekoppelt. Damit ist vorliegend gemeint, dass durch eine Bewegung des Kontaktabschnitts 120 über die Freilaufeinrichtung 136 eine Kraft auf das Spannmittel 32 übertragbar ist. Beim Abrollen des Fahrzeugrads 1 mit dem daran über den Befestigungsabschnitt 50 befestigten Aufsatz 10 werden die Kontaktabschnitte 120 durch den Kontakt mit der Straße nach radial innen bewegt. Dabei werden die Spannmittel 32 betätigt bzw. vorliegend wird eine Kraft auf die Spannmittel 32 übertragen. Die Spannmittel 32 werden mit dieser Kraft gegen die Felge 2 bzw. das Felgenhorn 9 gedrückt. Wird bei dieser Kraftübertragung eine bestimmte Kraft bzw. ein Grenzdruck, mit dem das Spannmittel 32 gegen das Felgenhorn 9 drückt, überschritten, so schieben sich die beiden Zylinderteile 140 und 142 ineinander. Dies geschieht beispielsweise dann, wenn der Kontaktabschnitt 120 noch nicht in seiner Endposition angekommen ist und der Hakabschnitt 34 das Felgenhorn 9 jedoch bereits vollständig hintergreift und an diesem anliegt. Der Kontaktabschnitt 120 ist bei der vorliegenden Ausführungsform in Form eines in Umfangsrichtung gewölbten Federblechs 144 ausgeführt, das einen Abschnitt des Laufflächenkörpers 24 nach radial außen drängt. Dieser Abschnitt des Laufflächenkörpers 24 weicht im unbelasteten Zustand also von der Kreisringform des restlichen Laufflächenkörpers 24 ab und wird bei Abrollen über die Fahrbahn F nach innen gedrückt, wobei Kraft über die Druckübertragungseinrichtung 134 und die Freilaufeinrichtung 136 auf das Spannmittel 32 übertragen wird.

Der Laufflächenkörper 24 umfasst vorliegend Hohlräume 148, die in einem elastischen Material 150 angeordnet sind. Hierdurch ist der Laufflächenkörper 24 besonders nachgiebig und dämpfend ausgebildet.

Die Druckübertragungseinrichtung 134 mit der Freilaufeinrichtung 136 umfasst auch einen Haltemechanismus 147. Der Haltemechanismus 147 ist beim vorliegenden Ausführungsbeispiel derart ausgebildet, dass er die beiden Zylinderteile 140 und 142 miteinander verriegelt, wenn der Kontaktabschnitt 120 komplett in die Lauffläche 22 eingefahren ist. Andere Ausführungen des Haltemechanismus 147 sind denkbar. Der Haltemechanismus 147 verhindert, dass die Spannmittel 32 sich aus ihrem Hintergriff mit dem Abschnitt der Felge 9 bzw. dem Felgenhorn 9 bewegen, wenn der Kontaktabschnitt 120 nicht mehr auf der Fahrbahn F aufliegt. Vorzugsweise ist der Haltemechanismus 147 über ein Werkzeug aus seinem eingerasteten Zustand lösbar.

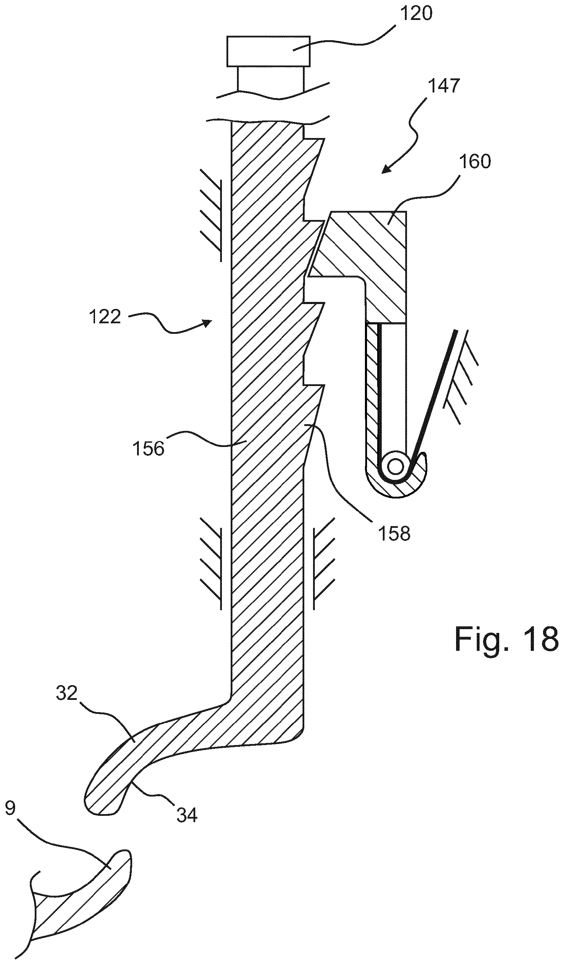

In den Figuren 18 bis 21 sind weitere mögliche Ausgestaltungen eines Verspannmechanismus 122 gezeigt. In Figur 18 ist eine Ausführungsform gezeigt, in der das Spannmittel 32 über einen Schaft 156, der ein Kraftübertragungselement 156 bildet, mit dem Kontaktabschnitt 120 verbunden ist. An dem Schaft 156 sind abgewinkelt Vorsprünge 158 angeordnet, in die ein federgelagerter Einrastmechanismus 160 eingreifen kann. Der Einrastmechanismus 160 zusammen mit den Vorsprünge 158 bildet einen Haltemechanismus 147, der den Hakabschnitt 34 in Kontakt mit dem Felgenhorn 9 hält, wenn er an diesem anliegt. Der Haltemechanismus 147 ist dabei in Fig. 18 lediglich schematisch dargestellt, beispielsweise kann der Abstand der einzelnen abgewickelten Vorsprünge 158 wesentlich feiner ausgebildet sein als dies in Figur 18 dargestellt ist.

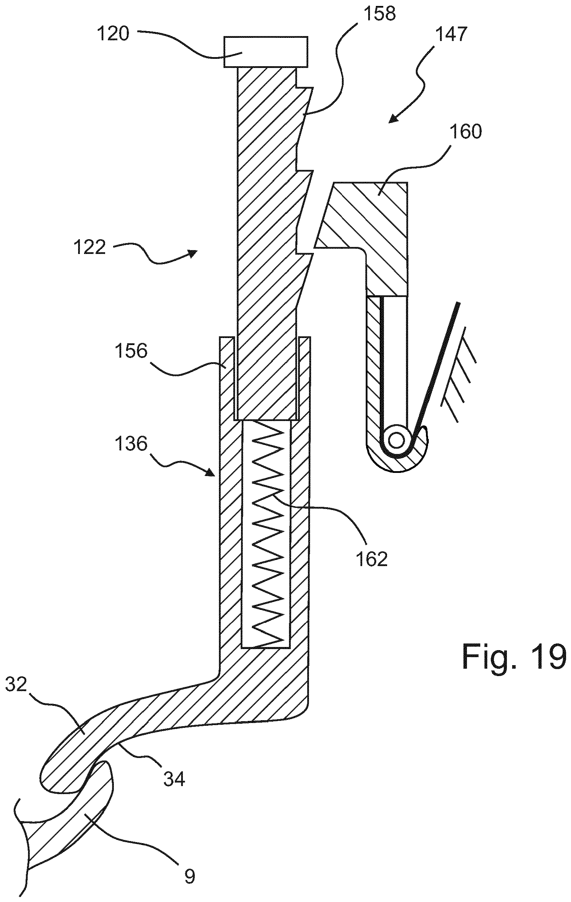

In Figur 19 ist ein weiterer Verspannmechanismus 122 gezeigt. Der Haltemechanismus 147 dieser Ausführungsform ist ähnlich dem von Figur 18. Der Verspannmechanismus 122 aus Figur 19 weist zusätzlich eine Freilaufeinrichtung 136 auf. Die Freilaufeinrichtung 136 umfasst eine Feder 162, die in dem Schaft 156 angeordnet ist. Durch die Feder 162 ist der Schaft 156 in seiner Erstreckung vom Hakabschnitt 34 zum Kontaktabschnitt 120 hin elastisch komprimierbar. Der Kontaktabschnitt 120 ist also weiter radial einwärts bzw. zum Felgenhorn 9 hin bewegbar, auch wenn der Hakabschnitt 34 bereits am Felgenhorn 9 anliegt und nicht mehr weiter radial einwärts bewegbar ist. Die Freilaufeinrichtung 136 bildet auch gleichzeitig eine Druckbegrenzungseinrichtung 152, da sie den Druck, mit dem das Spannmittel 32 die Felge 2 bzw. das Felgenhorn 9 kontaktiert auf einen Grenzdruck begrenzt. Sobald der Hakabschnitt 34 am Felgenhorn 9 anliegt und der Kontaktabschnitt 120 weiter Druck in Richtung radial innen ausgeübt, wird die Feder 162 komprimiert, sodass der Druck, mit dem das Spannmittel 32 am Felgenhorn 9 anliegt, auf den Druck, der zum Komprimieren der Feder162 notwendig ist, also den Grenzdruck der Druckbegrenzungseinrichtung 152, begrenzt ist.

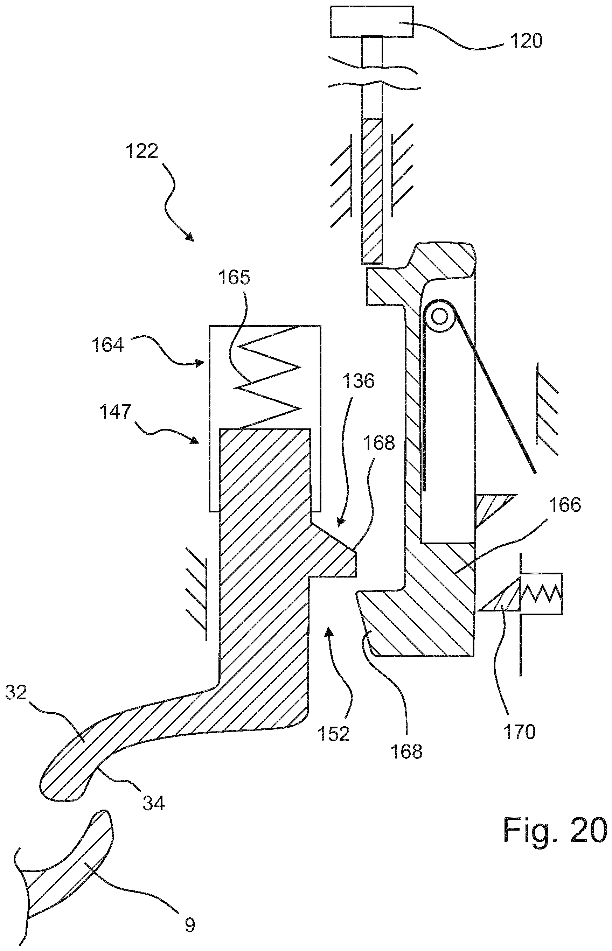

In Figur 20 ist eine Ausführungsvariante gezeigt, bei der der Verspannmechanismus 122 eine Vorspanneinrichtung 164 umfasst, die das Spannmittel 32 in Richtung des Felgenhorns 9 spannt. Die Vorspannung des Spannmittels 32 ist dabei vorliegend über die Feder 165 federbasiert ausgebildet. Denkbar ist jedoch auch eine Ausführungsform mittels eines Druckmittelspeichers, beispielsweise eine pneumatische Vorspannung. Ein Rückhalteelement 166 ist dabei derart angeordnet, dass es das Spannmittel 32 zurückhält, bis der Kontaktabschnitt 120 durch Kontakt mit der Fahrbahn F nach radial innen bewegt wird und hierdurch das Rückhalteelement 166 ebenfalls nach radial innen bewegt wird. Wird das Rückhalteelement 166 nach radial innen bewegt, so gibt es das Spannmittel 32 frei, wodurch das Spannmittel 32 aufgrund seiner Vorspannung ebenfalls nach radial innen bewegt wird und mit dem Felgenhorn 9 in Kontakt gelangt.

Die Ausführungsform von Figur 20 weist eine Druckbegrenzungseinrichtung 152 sowie eine Freilaufeinrichtung 136 auf, die durch die beiden ineinander hakenden Abschnitte 168 am Schaft 156 des Spannmittels 32 und dem Rückhalteelement 166 gebildet sind. Liegt das Spannmittel 32 am Felgenhorn 9 an, so kann der hakende Abschnitt 168, der am Rückhalteelement 166 angeordnet ist, sich weiter nach radial innen bewegen und vom hakenden Abschnitt 168 am Schaft 156 des Spannmittels 32 abheben. Das Spannmittel 32 liegt dann aufgrund seiner Federvorspannung mit einem genau definierten Druck am Felgenhorn 9 an.

Die Vorspanneinrichtung 164 des Verspannmechanismus 122 in Figur 20 bildet zusammen mit dem federgelagerten Vorsprung 170 auch den Haltemechanismus 147, der ausgebildet ist, um das Spannmittel 32 in seiner Position zu halten, wenn das Spannmittel 32 mit seinem Hakabschnitt 34 in Hintergriff mit dem Abschnitt 9 der Felge 2, vorzugsweise dem Felgenhorn 9, steht.

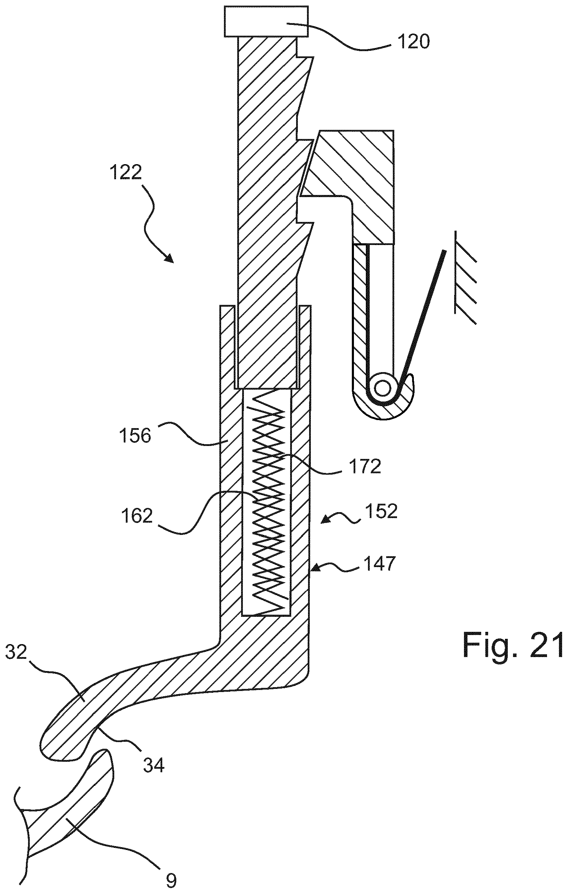

In Figur 21 ist eine Ausführungsvariante gezeigt, die der Ausführungsform von Figur 19 ähnelt. Die Feder 162 der Ausführungsform von Figur 19 ist bei der Ausführungsform von Figur 21 jedoch durch ein plastisch verformbares Element 172 ergänzt. Hierdurch kann die Aktivierung der Freilaufeinrichtung 136 auf einen höheren Druck eingestellt werden, als der Anpressdruck (vorgegeben durch die Feder 162 des Haltemechanismus 147), mit dem der Hakabschnitt 34 das Felgenhorn 9 kontaktiert. Erst wenn der Druck, den der Kontaktabschnitt 120 in Richtung Felgenhorn 9 auf das Spannmittel 32 ausübt, groß genug ist, um das plastisch verformbare Element 172 plastisch zu verformen, ist die Freilaufeinrichtung 136 aktiv. Der Haltemechanismus 147 wirkt hingegen mit der Kraft der Feder 162.

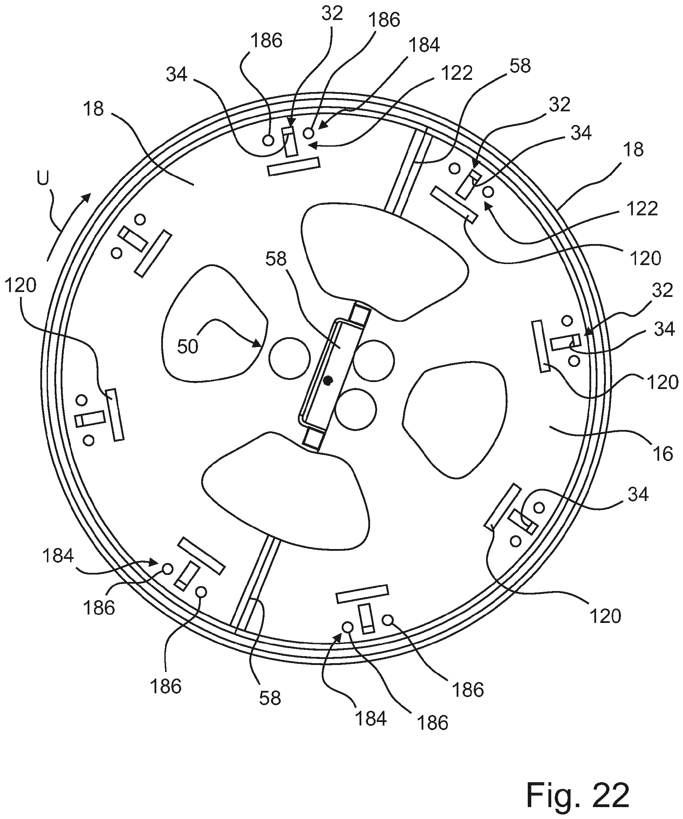

Figur 22 zeigt eine alternative Ausführungsform des erfindungsgemäßen Aufsatzes 10 bei Blick auf seine im Montagezustand dem Fahrzeugrad 1 zugewandte Seite. Um den Umfang des Aufsatzes 10 bzw. der Lauffläche 18 verteilt sind mehrere Kontaktabschnitte 120 an dem Aufsatz 10 angeordnet. Die Kontaktabschnitte 120 sind dabei derart angeordnet, dass sie bei der vorgesehenen Anbringung am Fahrzeugrad 1 dem Fahrzeugrad 1 zugewandt sind und das Fahrzeugrad 1, insbesondere die Felge 2, kontaktieren können.

Der in Figur 22 gezeigte Aufsatz 10 und die jeweiligen Verspannmechanismen 122 sind derart ausgebildet, dass die Kontaktabschnitte 120 beim Anbringen des Aufsatzes 10 die Felge 2 kontaktieren und dadurch betätigt werden. Durch die Betätigung der Kontaktabschnitte 120 werden über den jeweiligen Verspannmechanismus 122 die Spannmittel 32, den die jeweiligen Kontaktabschnitt 120 zugeordnet sind betätigt und in Hintergriff mit dem Felgenhorn 9 gebracht. Die Spannmittel 32 können jedoch auch derart ausgebildet und angeordnet sein, dass sie die Felge 2 an einem anderen Abschnitt als dem Felgenhorn 9 hintergreifen.

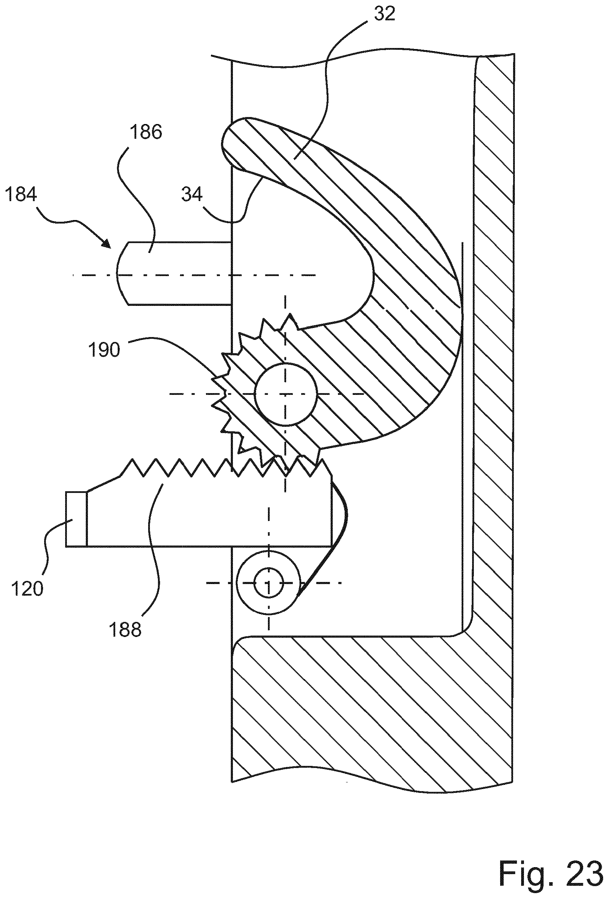

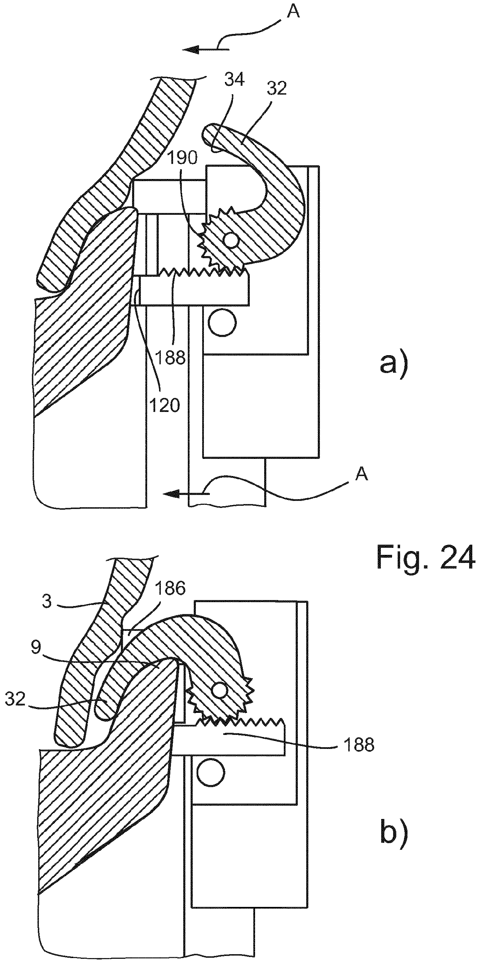

Die Spannmittel 32 bzw. Verspannmechanismen 122 sind bei der Ausführungsform von Figur 22 derart ausgebildet, dass die Spannmittel 32 schwenkend das Felgenhorn 9 hintergreifen, wenn sie betätigt werden. Die Spannmittel 32 sind in den Figuren 23 und 24 im Detail dargestellt.

Der Aufsatz aus Fig. 22 umfasst Reifenverdrängeinrichtungen 184, die ausgebildet sind, um den Reifen 3 beim Anbringen des Aufsatzes 10 und beim Betätigen der Spannmittel 32 in axialer Richtung A vom Felgenhorn 9 weg zu drängen. Die Reifenverdrängeinrichtungen 184 sind dabei jeweils einem Spannmittel 32 zugeordnet und gesondert von dem Spannmittel 32 ausgebildet. Eine Reifenverdrängeinrichtung 184 kann jedoch auch in dem Spannmittel 32 integriert ausgebildet sein.

Im vorliegenden Beispiel sind die einzelnen Reifenverdrängeinrichtungen 184 in Form von jeweils zwei Vorsprüngen 186 ausgebildet, die in Umfangsrichtung U jeweils beidseitig neben dem jeweiligen Spannmittel 32, dem sie zugeordnet sind, angeordnet sind. Die Vorsprünge 186 ragen in axialer Richtung A von der der Felge 2 zugewandten Seite des Aufsatzes 10 ab und sind vorliegend stabartig ausgebildet.

Die Kontaktabschnitte 120 sind über einen jeweiligen Zahnstangenabschnitt 188 mit einer Verzahnung 190 der Spannmittel 32 gekoppelt. Hierauf wird weiter unten noch im Detail eingegangen.

Wird der Aufsatz 10 am Fahrzeugrad 1 über den Befestigungsabschnitt 50 angebracht, so kontaktieren die Vorsprünge 186 der Reifenverdrängeinrichtungen 184 den Reifen 3 im Bereich um das Felgenhorn 9, wie in Figur 24 a) gezeigt. Beim Anbringen des Aufsatzes 10 bewegt sich der Aufsatz in axialer Richtung A zum Fahrzeugrad 1 hin. Die Reifenverdrängeinrichtungen 184 drängen dabei den Reifen 3 jeweils in axialer Richtung A vom Felgenhorn 9 weg. Gleichzeitig kontaktieren die Kontaktabschnitte 120 die Felge 2 und werden hierdurch betätigt. Über die Betätigung der Kontaktabschnitte 120 werden die Spannmittel 32 betätigt. Die Kontaktabschnitte 120 bewegen sich in axialer Richtung A in den Aufsatz 10 hinein und vorliegend ist ihre Bewegung über die Zahnstangenabschnitte 188 und die Verzahnungen 190 mit einer Schwenkbewegung der Spannmittel 32 gekoppelt. Die Spannmittel 32 schwenken derart auf die Felge 2 zu, dass sie mit dem Felgenhorn 9 in Hintergriff gelangen. Der Zustand, in dem der Aufsatz 10 vollständig am Fahrzeugrad 1 befestigt ist, ist in Figur 24b gezeigt. Die Spannmittel 32 stehen in Hintergriff mit dem Felgenhorn 9 und der Aufsatz 10 ist sicher am Fahrzeugrad 1 befestigt. Die Kopplung der Betätigung der Kontaktabschnitte 120 und der Betätigung der Spannmittel 32 kann auch andersartig implementiert sein als über die Kopplung der Zahnstangenabschnitte 188 mit den Verzahnungen 190.

Insbesondere ist es vorteilhaft, wenn die Verspannmechanismen 122 der Spannmittel 32 eine Freilaufeinrichtung 136 aufweisen.

Auch bei den Kontaktabschnitten 120, die ausgebildet und angeordnet sind, um über Kontakt mit der Felge 2 betätigt zu werden, ist es denkbar, dass die Spannmittel 32 einem Verspannmechanismus 122 zugeordnet sind, der derart ausgebildet ist, dass das Spannmittel 32 gegen den Abschnitt der Felge 2 vorgespannt, insbesondere federvorgespannt, ist und durch ein Rückhalteelement 166 gehalten ist, welches das Spannmittel 32 freigibt, sodass das Spannmittel 32 sich aufgrund der Vorspannung auf die Felge 2, insbesondere den Abschnitt 10 der Felge 2, hin bewegt, insbesondere der Hakabschnitt 34 den Abschnitt der Felge 10 hintergreift, wenn der Kontaktabschnitt 120 betätigt, insbesondere mit Druck beaufschlagt, wird.

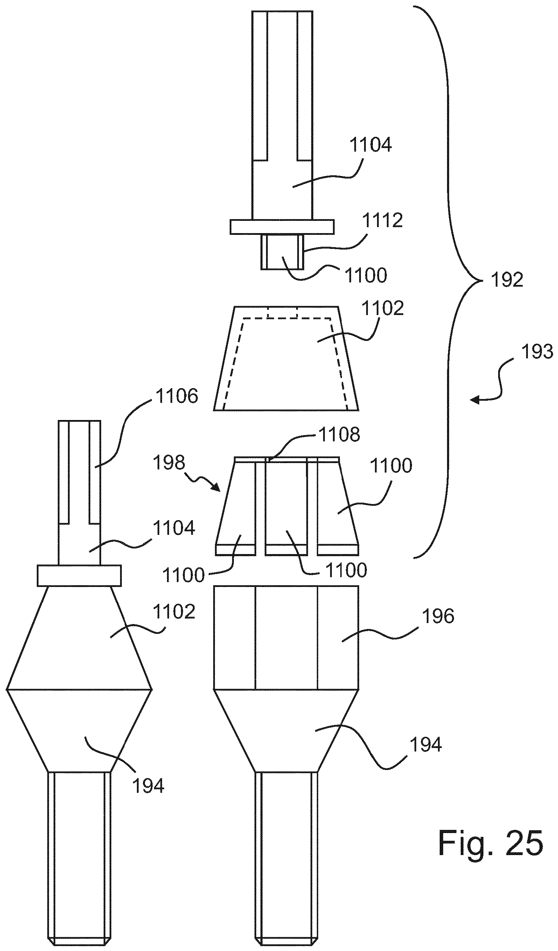

Figur 25 zeigt einen Adapter 192, der auf eine herkömmliche Radschraube 194 eines Fahrzeugrads 1 aufsetzbar ist. Der Adapter 192 stellt eine Einrichtung 193 zum beklemmenden Erfassen einer herkömmlichen Radschraube 194 dar. Die Schraube 194 des Fahrzeugrads 1 weist einen Kopf 196 mit Aussensechskant auf. Der Adapter 192 umfasst eine Klemmhaube 198 mit sechs Klemmarmen 1100, die entsprechend dem Aussensechskant des Kopfes 196 ausgebildet angeordnet sind. Der Adapter 192 umfasst des Weiteren eine Klemmhülse 1102, die wenn sie auf die Klemmhaube 198 aufgeschoben wird, die Klemmarme 1100 derart aufeinander zu spannt, dass der Kopf 196 der Radschraube 194 durch die Klemmarme 1100 gegriffen wird. Der Adapter 192 umfasst außerdem einen Bolzen 1104, mit dem die Klemmhülse 1102 gegen die Klemmhaube 198 spannbar ist. Dieser verspannte Zustand ist in Figur 25 links gezeigt, während rechts eine Darstellung gezeigt ist, in der die einzelnen Komponenten des Adapter 192 sowie die Radschraube 194 jeweils getrennt voneinander dargestellt sind. Der Bolzen 1104 weist ein Außengewinde 1106 auf. Über den Bolzen 1104 und das Außengewinde 1106 kann über eine Schraubenmutter ein Aufsatz 10 am Fahrzeugrad 1 angebracht werden. Denkbar sind jedoch auch andere Ausgestaltungen des Bolzens 1104, die eine Befestigung eines Aufsatzes 10 erlauben. Beispielsweise kann der Bolzen 1104 ein Innengewinde tragen oder biegbare Arme mit Hakabschnitten aufweisen, sodass der Aufsatz 10 quasi über diese Arme geschoben werden kann und die Arme dann den Aufsatz 10 hakend hintergreifen. Vorteilhaft ist, wenn der Bolzen 1104 derart ausgebildet ist, dass ein Aufsatz 10 kraft- oder formschlüssig gehalten mittels des dem Bolzens 1104 am Fahrzeugrad 1 anbringbar ist.

Die Klemmhaube 198 weist ein Innengewinde 1108 auf, in das ein Fortsatz 1110 mit Außengewinde 1112 des Bolzens 1104 eingeschraubt werden kann, sodass die Klemmhaube 198 in die Klemmhülse 1102 gezogen wird, wodurch die Klemmarme 1100 aufeinander zu gespannt werden. Hierdurch kann der Schraubenkopf 196 der Radschraube 194 kraftschlüssig ergriffen werden.

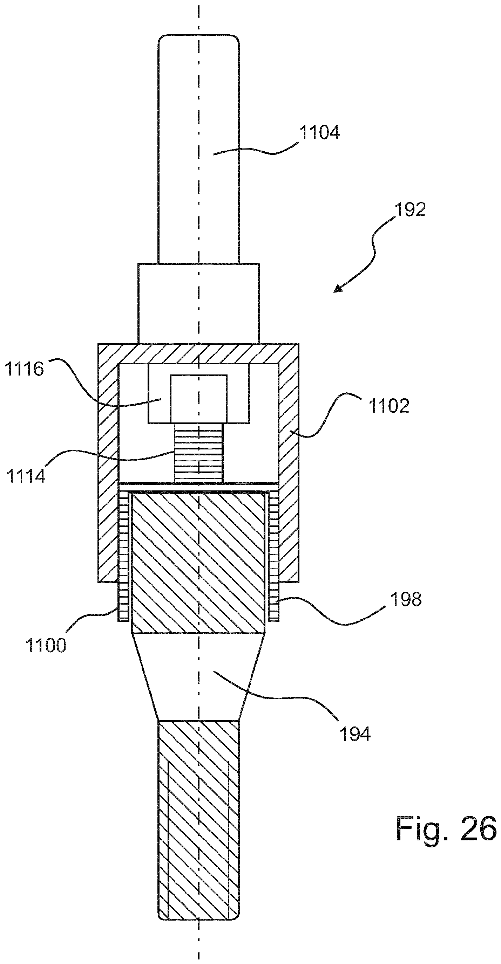

In Figur 26 ist eine alternative Ausführungsform des Adapters 192 gezeigt. Diese unterscheidet sich von der Ausführungsform aus Figur 25 dadurch, dass die Klemmhaube 198 einen Fortsatz 1110 mit Außengewinde umfasst und der Bolzen 1104 einen Fortsatz 1116 mit Innengewinde.

Der Bolzen 1104 kann auch Hakabschnitte 1116 umfassen, die entsprechende Ausnehmungen 1118 an speziell angepassten Radschrauben 1193 eingreifen können. Derartige Hakabschnitte 1116 sind auch im Bereich des Befestigungsabschnitts 50 des Aufsatzes 10 denkbar, sodass der Aufsatz 10 zum Anbringen quasi auf die speziell angepassten Radschrauben 194 aufclipsbar ist.

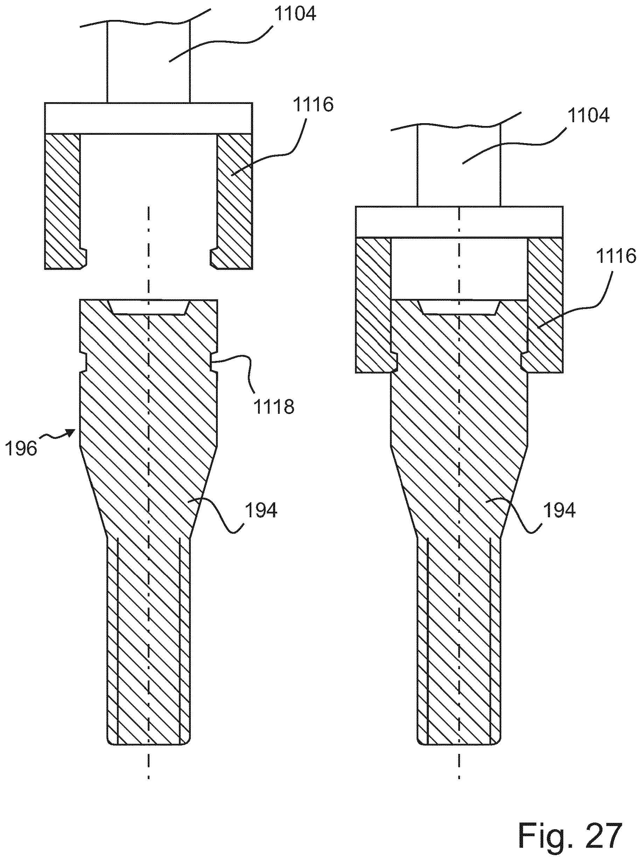

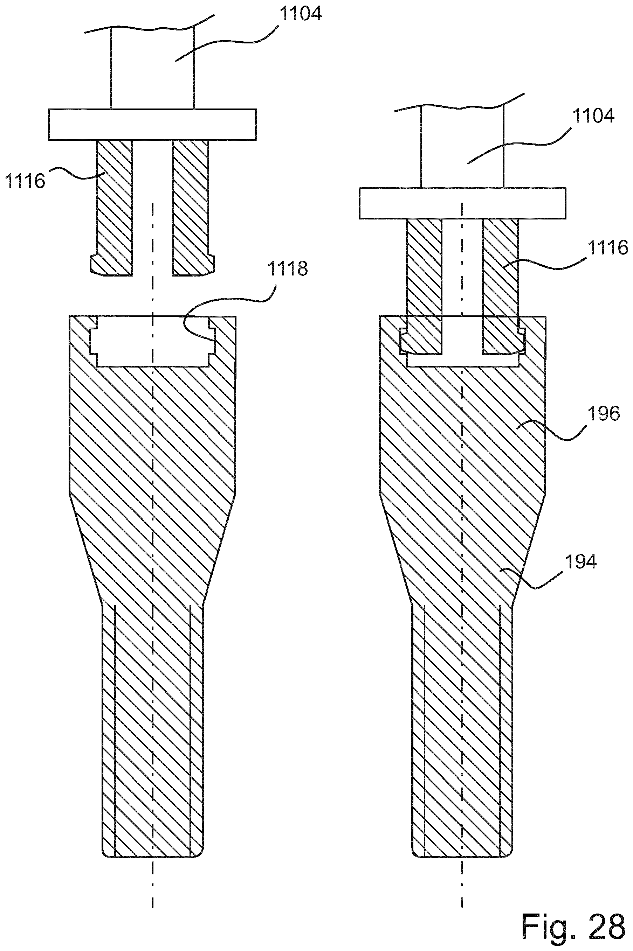

Dabei ist es denkbar, dass die Ausnehmungen 1118, wie in Figur 27 gezeigt außenliegend am Schraubenkopf 196 angeordnet sind, oder auch wie in Figur 28 gezeigt, innenliegend angeordnet sind. Eine derartige Ausbildung stellt eine Einrichtung 193 zum hintergreifenden Erfassen einer angepassten Radschraube 194 dar.

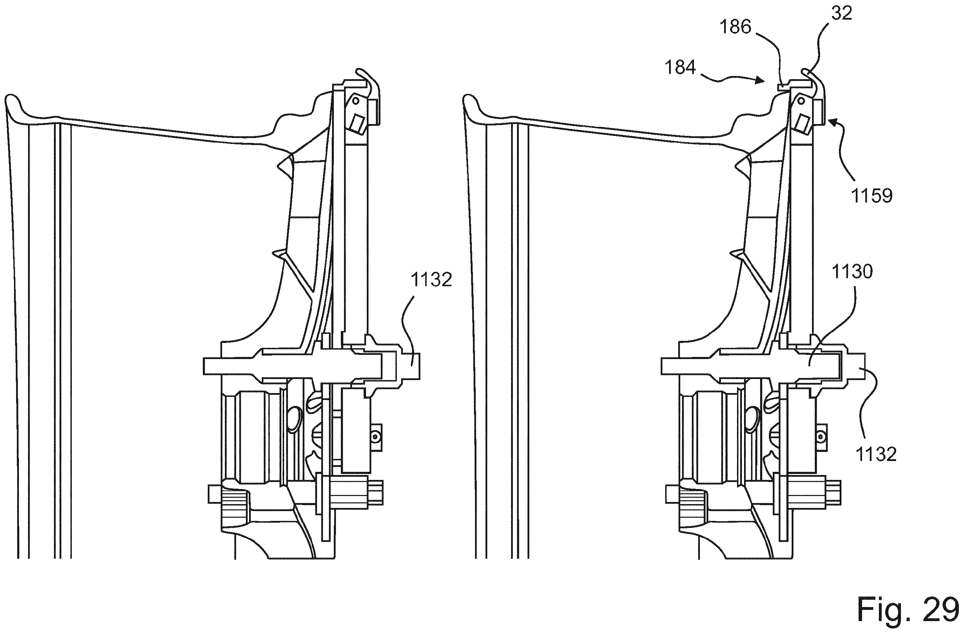

Wie in Figur 29 gezeigt, so ist es auch möglich den Aufsatz 10 über Spezialbolzen 1130 am Fahrzeugrad 1 anzubringen, wobei die Spezialbolzen 1130 derart ausgebildet sind, dass sie eine herkömmliche Radschrauben 194 ersetzen und so lang sind, dass der Aufsatz 10 mittels entsprechender Muttern 1132 am Fahrzeugrad 1 anbringbar ist. Die Spannmittel 32 können dann beispielsweise gesondert betätigbar ausgebildet sein.

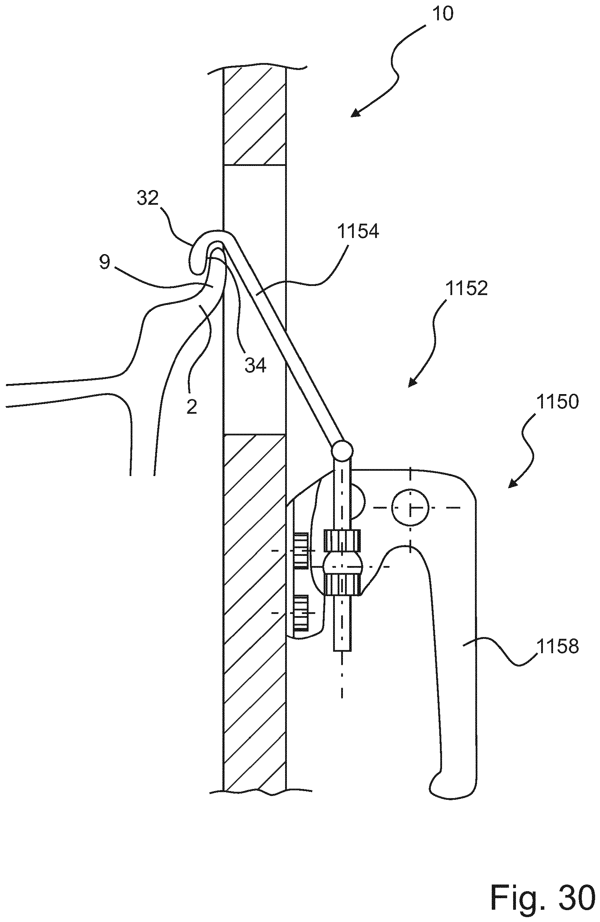

Figur 30 zeigt eine weitere alternative Ausführungsform des Aufsatzes 10 bei dem statt dem Verspannmechanismus 122 mit dem Kontaktabschnitt 120 eine Betätigungseinrichtung 1150 für die jeweiligen Spannmittel 32 vorgesehen ist, mit der das Spannmittel 32 in Hintergriff mit dem Abschnitt 9 der Felge 2, vorzugsweise dem Felgenhorn 9 bringbar ist. Die Betätigungseinrichtung 1150 ist in Form eines Hebelmechanismus 1152, vorliegend mit einem Hebelarm 1154, an dem das Spannmittel 32 angeordnet ist, der beispielsweise manuell über einen Handgriff 1158, der Teil der Betätigungseinrichtung 1150 ist, bedienbar ist, ausgebildet.

Von Vorteil ist auch, wenn das oder die Spannmittel 32 statt dem oder zusätzlich zu dem Handgriff 1158 eine Ansatzeinrichtung 1159 (Figur 29) aufweisen, über die ein Hebel an das Spannmittel 32 angesetzt werden kann, sodass das Spannmittel 32 über diesen Hebel auf den Abschnitt 9 der Felge 2, vorzugsweise das Felgenhorn 9, bewegbar oder schwenkbar ist. Ein derartiger Hebel kann die eben genannte Betätigungseinrichtung 1150 bilden.

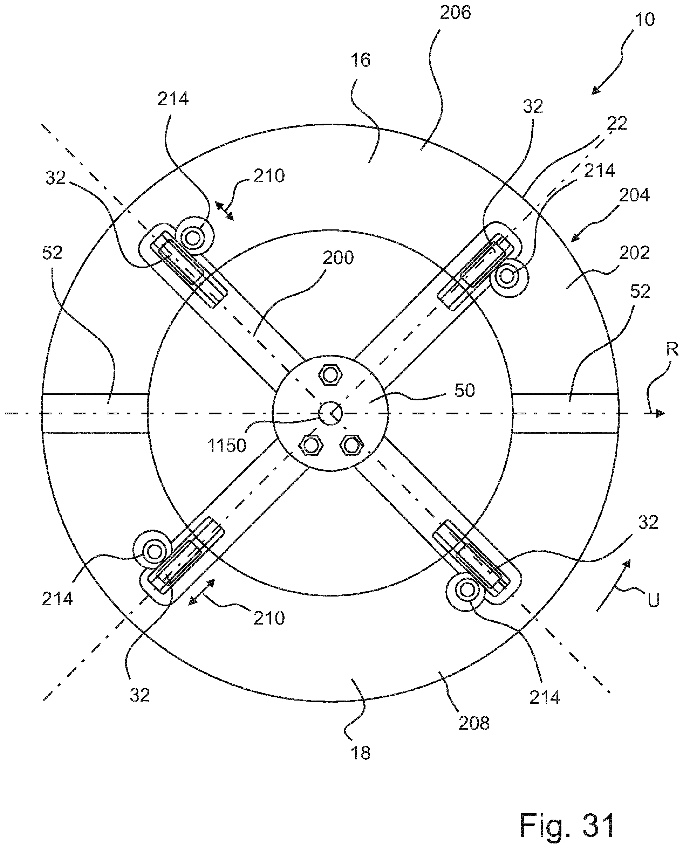

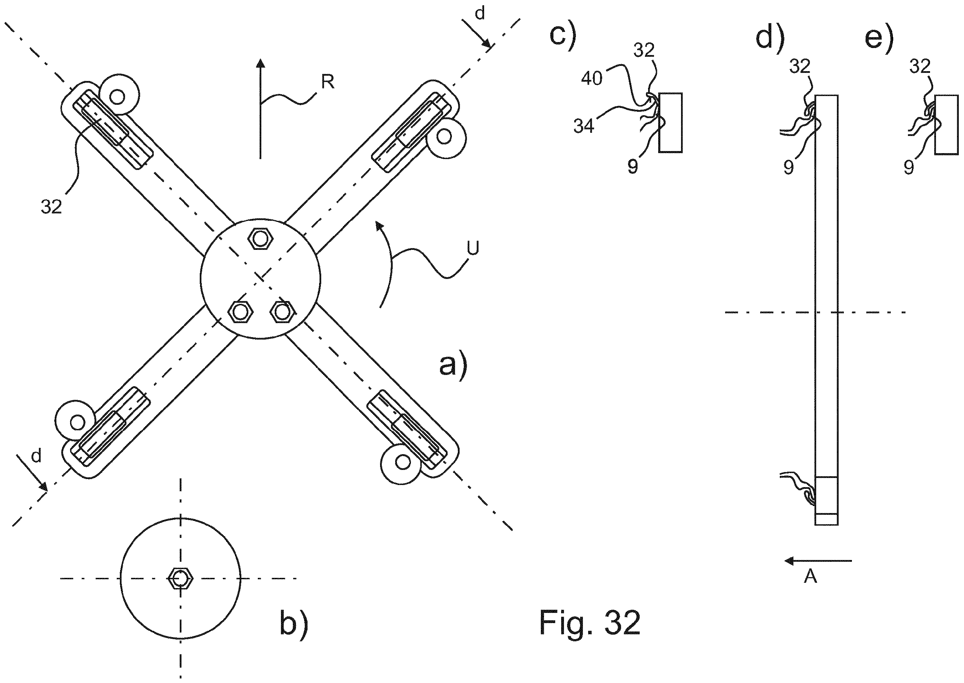

Figur 31 und 32 zeigen eine weitere alternative Ausführungsform eines Aufsatzes 10, welche aber nicht Teil der beanspruchten Erfindung ist. Der Aufsatz 10 aus Figur 31 und 32 umfasst einen Grundkörper 20, und wobei der Grundköper 20 ein erstes radiales Element 200 und ein zweites radiales Element 202 umfasst, wobei das erste radiale Element 200 ausgebildet ist, um am Fahrzeugrad 1 befestigt zu werden, und wobei das zweite radiale Element 202 ausgebildet ist, um an dem ersten radialen Element 200 in einer Betriebsposition befestigt zu werden. Diese Betriebsposition ist in Figur 31 gezeigt. Das zweite radiale Element 202 erstreckt sich in einem Teil 204 des Umfangs des Aufsatzes 10 in radialer Richtung R über das erste radiale Element 200 hinaus, wenn es an dem ersten radialen Element 200 in der Betriebsposition befestigt ist, bei der in Figur 31 gezeigten Ausführungsform umfasst dabei der Teil 204 des Umfangs den gesamten Umfang des Aufsatzes. Der Aufsatz 10 aus Figur 31 und 32 ist also quasi in radialer Richtung R mehrteilig aufgebaut. Der Aufsatz 10 hat den Vorteil, dass das erste radiale Element 200 in einfacher Weise am Fahrzeugrad 1 bzw. an der Felge 2 des Fahrzeugrads 1 befestigbar ist und in einem weiteren Schritt das zweite radiale Element 202 an dem bereits befestigten ersten radialen Element 200 befestigbar ist. Das erste radiale Element 200 ist vorliegend kreuzartig ausgebildet.

Der Aufsatz 10 weist an dem ersten radialen Element 200 mehrere Spannmittel 32 auf. Diese sind jeweils mit einem Hakabschnitt 34 ausgebildet und am den radial äußeren Enden der Arme des kreuzartig ausgebildeten ersten radialen Elements angeordnet. Die Spannmittel 32 sind derart an dem ersten radialen Element 200 angeordnet, dass das erste radiale Element über die Spannmittel zentriert an der Felge 2 befestigbar ist. Der Hakabschnitt 34 der jeweiligen Spannmittel 32 ist dabei ausgebildet, um einen Abschnitt 9, insbesondere ein Felgenhorn 9, der Felge 2 des Fahrzeugrads 1 zu hintergreifen. Die Spannmittel 32 können wie weiter oben im Zusammenhang mit den vorigen Ausführungsformen bereits beschrieben ausgebildet sein. Über die Spannmittel 32 kann das erste radiale Element 200 in vorteilhafter Weise bevorzugt am Felgenhorn 9 befestigt werden.

Die Spannmittel 32 umfassen, wie in den Figuren 32 c) und e) illustriert, in axialer Richtung A gesehen nach radial innen, vorzugsweise linear oder bogenförmig, abfallende Spannflächen 40 umfassen, wobei die Spannmittel 32 derart ausgebildet sind, dass sich die Spannfläche 40 beim Befestigen und Verspannen des ersten radialen Elements 200 an der Felge 2 nach radial innen bewegt, insbesondere verschiebt, und die Spannfläche 40 derart ausgebildet ist, dass das erste radiale Element 200 beim Befestigen und Verspannen an der Felge 2 des Fahrzeugrads 1 in axialer Richtung A zur Felge 2 hin gedrängt wird. Beim Befestigen über die Spannmittel 32 zieht sich das erste radiale Element 200 durch die Befestigung über die Spannmittel 32 quasi von selbst in axialer Richtung in Richtung des Fahrzeugrads 1.

Das erste radiale Element 200 ist vorliegend einstückig ausgebildet. Möglich ist jedoch auch, wenn das erste radiale Element 200 mehrere voneinander lösbare und/oder zueinander beweggliche, vorzugsweise schwenkbare, Teile umfasst.

Das zweite radiale Element 202 umfasst vorliegend mehrere voneinander lösbare und zueinander beweggliche, nämlich schwenkbare, Teile 206 und 208. Die Teile 206 und 208 bilden auch ein erstes umfängliches Segment 16 und ein zweites umfängliches Segment 18. Der Aufsatz 10 bzw. das zweite radiale Element 202 kann zerlegt bzw. kompakt zusammengelegt werden, wodurch der Aufsatz 10 in einfacher Weise verstaubar ist. Die beiden lösbar, schwenkbar miteinander verbundenen Teile 206 und 208 sind über lösbare Scharniereinrichtungen 52 miteinander verbunden.

Eine Ausführungsform des Aufsatzes 10 mit erstem und zweitem radialem Element 200 und 202 ist auch mit einem Montageelement 26, bspw. einem Montageelement 26, wie es im Ausführungsbeispiel nach Figur 3 und 4 gezeigt ist, aber auch mit allen anderen in dieser Anmeldung beschriebenen Varianten eines Montageelements 26 und ggf. mit weiteren mit dem Montageelement 26 in Verbindung stehenden Komponenten kombinierbar.

Die Lauffläche 22 des Aufsatzes 10 ist vollständig an dem zweiten radialen Element 202 angeordnet.

Die Spannmittel 32 sind in radialer Richtung R verschieblich am ersten radialen Element 200 angeordnet. Das erste radiale Element 200 lässt sich auf verschiedene Größen von Felgen 1 anpassen. Die Verschieblichkeit der Spannmittel 32 ist durch entsprechende Doppelpfeile zu 110 gekennzeichnet.

Vorzugsweise ist an dem ersten radialen Element 200 eine Betätigungseinrichtung 1150 vorgesehen, über die die Spannmittel 32 derart betätigbar sind, dass sie das Felgenhorn 9 der Felge 2 hintergreifen, insbesondere nach radial innen verfahren oder verschwenkt werden, sodass sie das Felgenhorn 9 hintergreifen.

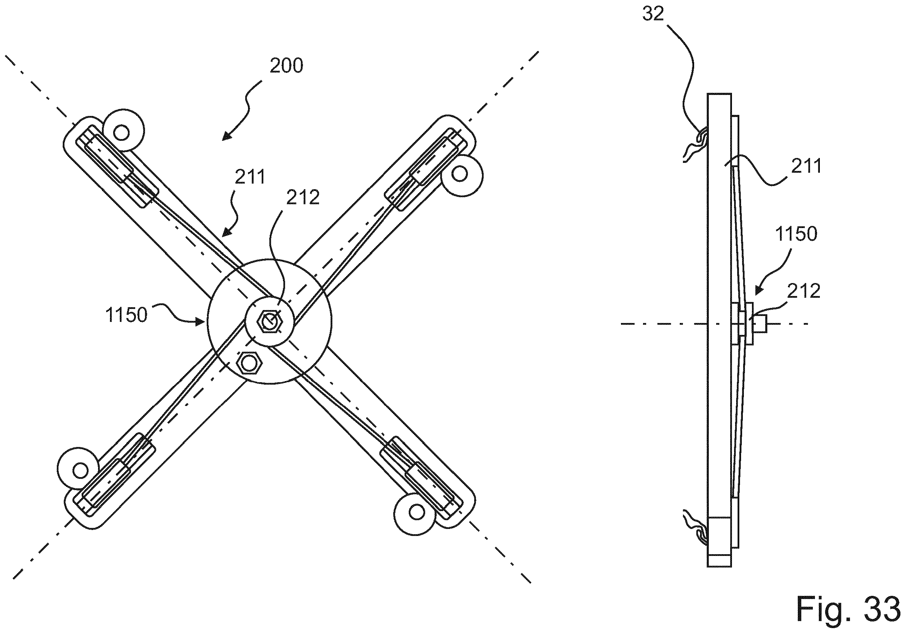

Vorteilhafterweise umfasst die Betätigungseinrichtung 1150 eine Seilzugeinrichtung 211, die vorzugsweise eine Trommeleinrichtung 212 zum Aufwickeln des Seilzugs umfasst, wobei über die Seilzugeinrichtung 211 vorzugsweise sämtliche Spannmittel 32 miteinander gekoppelt sind und die Spannmittel 32 durch die Seilzugeinrichtung 211, vorzugsweise gleichförmig, bewegbar sind. Eine derartige Ausführungsform des ersten radialen Elements 200 ist in Figur 33 gezeigt.

Bevorzugt ist auch, wenn das erste radiale Element 200 im Bereich des Lochkreises über eine Schraubverbindung an der Felge 2 befestigbar ist. Die kann über einen Befestigungsabschnitt 50 realisiert sein. Bevorzugt ist, wenn zusätzlich hierzu die oben erwähnten Spannmittel 32 am ersten radialen Element 200 vorgesehen sind. Eine derartige Befestigung kann über eine Schraubverbindung (Fig. 32 a)) oder über eine Verbindung mit mehreren Schraubverbindungen (Fig. 32 b)) realisiert sein.

Nachfolgend wird die Montage des in radialer Richtung mehrteilig aufgebauten Aufsatzes 10 kurz skizziert. Zunächst wird das erste radiale Element 200 im Bereich des Lochkreises 4 verschraubt. Hierzu kann beispielsweise eine der ursprünglichen Radschrauben durch eine oder mehrere Sonderschraube(n) ersetzt werden. Danach können die Spannmittel 32 in Hintergriff mit dem Felgenhorn 9 gebracht werden. Es ist auch möglich, dass das erste radiale Element 200 derart ausgebildet ist, dass es lediglich mittels der Spannmittel 32 am Felgenhorn 9 befestigt wird. Nachdem das erste radiale Element 200 am Fahrzeugrad 1 befestigt ist, kann das zweite radiale Element 202 an dem ersten radialen Element 200 befestigt werden. Vorzugsweise weisen die beiden radialen Elemente 200, 202 hierzu entsprechend ausgebildete Befestigungseinrichtungen 214 bzw. Verschraubeinrichtungen 214 auf.

Der erste Teil 206 des zweiten radialen Elements 202 wird auf einer der Fahrbahn abgewandten Seite am ersten radialen Element befestigt. Das Fahrzeugrad 1 wird anschließend so gedreht, dass der bereits am ersten radialen Element 200 befestigte Teil 206 des zweiten radialen Elements 202 in Kontakt mit der Fahrbahn kommt und dann das weitere Teil 208 bzw. die weiteren Teile des zweiten radialen Elements 202 am ersten radialen Element 200 befestigt werden können, ohne dass die Fahrbahn hierbei im Weg wäre.

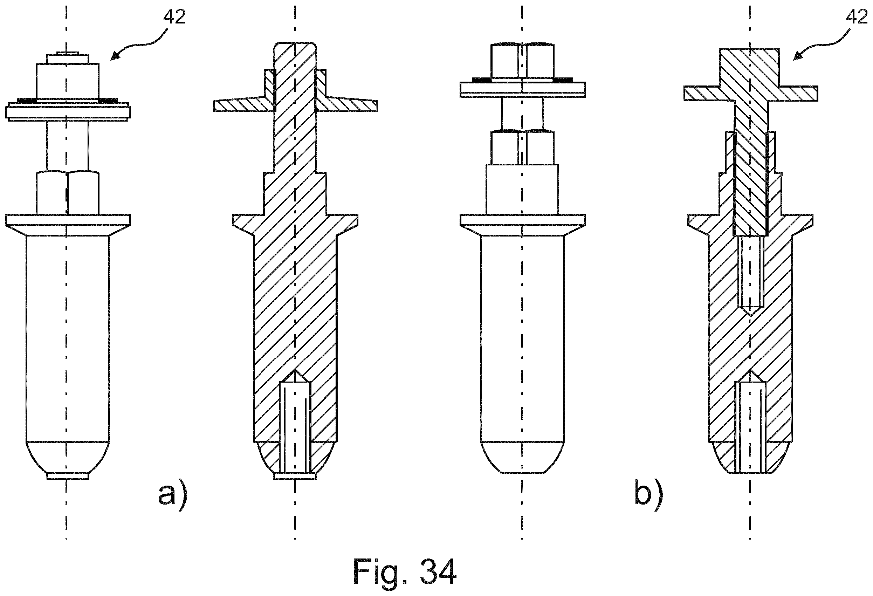

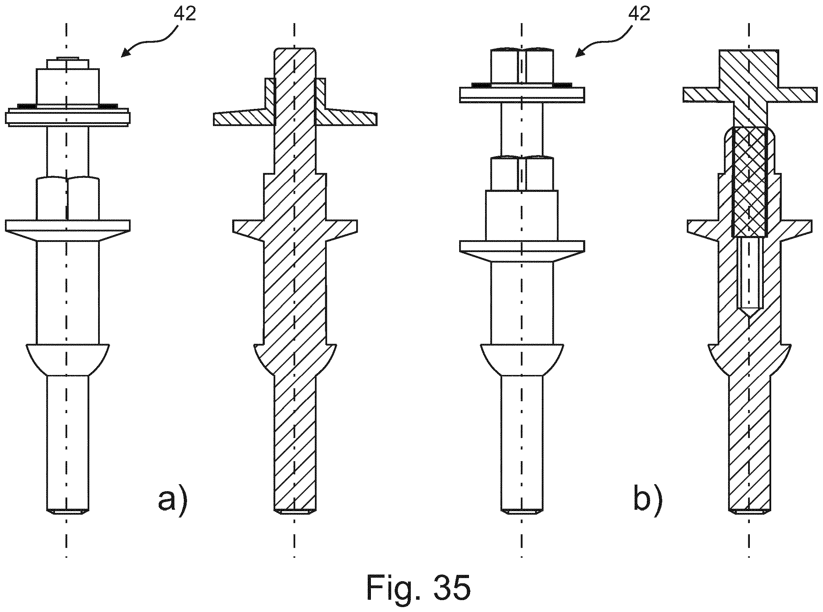

Die Figuren 34 und 35 zeigen jeweils Sonderschrauben bzw. Aufsatzbefestigungsschrauben 42, die zur Anbringung bzw. Befestigung des Aufsatzes 10, insbesondere über den Befestigungsabschnitt 50, verwendet werden können. Dabei sind die Ausführungsformen von Figur 34 a) und b) auf Stehbolzen, die zur Befestigung des Fahrzeugrads 1 verwendet werden, nach Entfernung der entsprechenden Radmutter aufschraubbar. Die Ausführungsformen von Figur 35a) und b) können dagegen statt den herkömmlichen Radschrauben eingesetzt werden.

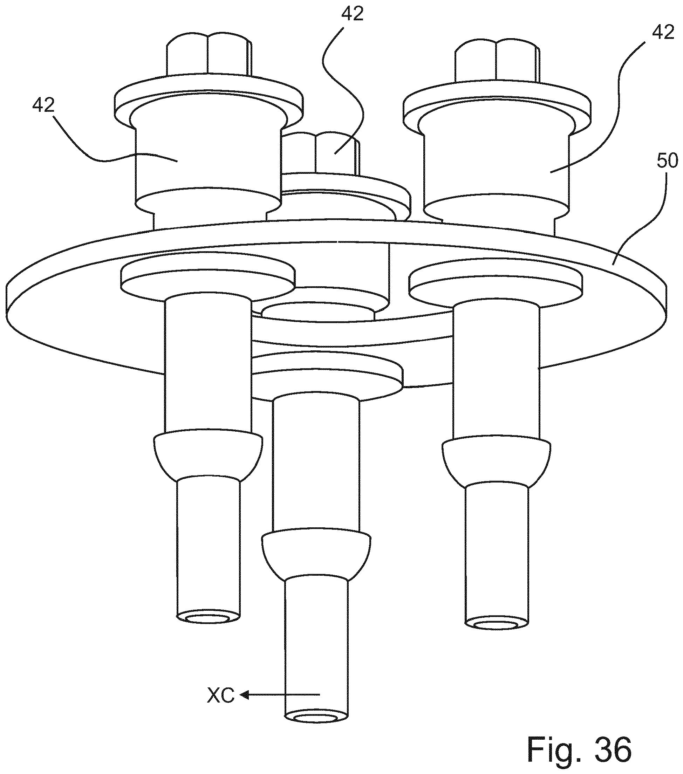

In Figur 36 ist Montageelement 26 gezeigt, welches mittels Aufsatzbefestigungsschrauben 42 an dem Fahrzeugrad 1 in einer Montageposition an einem Aufsatz 10 befestigbar ist.

## Patentansprüche

1. Aufsatz (10) für ein Fahrzeugrad (1) zur Ermöglichung eines Fahrbetriebs bei eingeschränkter Reifenfunktion mit einem Grundkörper (20), der in einem Betriebszustand des Aufsatzes (10) eine kreisringförmige Lauffläche (22) aufweist,
wobei der Grundkörper (20) wenigstens ein erstes umfängliches Segment (16) und ein zweites umfängliches Segment (18) umfasst,
wobei das erste umfängliche Segment (16) in Umfangsrichtung (U) starr ausgebildet ist und am Fahrzeugrad (1) befestigbar ist,
wobei das erste umfängliche Segment (16) einen Befestigungsabschnitt (50) umfasst, über den es im Bereich eines Lochkreises (4), vorzugsweise an dem Lochkreis (4), des Fahrzeugrades (1) befestigbar ist,
wobei der Aufsatz (10) ferner ein Montageelement (26) umfasst, das an dem Aufsatz (10), vorzugsweise dem ersten umfänglichen Segment (16), und/oder am Fahrzeugrad (1) derart befestigt ist oder ausgebildet ist um an diesem derart befestigbar zu sein, dass es in eine Montageposition überführbar ist oder sich in der Montageposition befindet, wobei das Montageelement (26) das zweite umfängliche Segment (18) gegenüber dem ersten umfänglichen Segment (16) ausrichtet und gegen die Felge (2) des Fahrzeugrads (1) drängt, wenn das erste umfängliche Segment (16) am Fahrzeugrad (1) befestigt ist und sich das Montageelement (26) in der Montageposition befindet, und
wobei das Montageelement (26) ein Lochmuster umfasst, das jedenfalls einem Teil des Lochmusters des Lochkreises des Fahrzeugrades (1) entspricht.

2. Aufsatz (10) nach Anspruch 1, **dadurch gekennzeichnet, dass**
das Montageelement (26) gegenüber dem ersten umfänglichen Segment (16) verschwenkbar oder verschiebbar ist,
und/oder das Montageelement (26) von dem ersten umfänglichen Segment (16) lösbar ist,
und/oder an dem ersten umfänglichen Segment (16) und/oder an dem zweiten umfänglichen Segment (18) Sicherungseinrichtungen (31) für das Montageelement (26) angeordnet sind, um dessen Position, vorzugsweise in Umfangsrichtung (U), gegenüber dem ersten umfänglichen Segment (16) bzw. dem zweiten umfänglichen Segment (18) festzulegen.

3. Aufsatz (10) nach einem oder mehreren der vorangegangenen Ansprüche, **dadurch gekennzeichnet, dass** auch der Befestigungsabschnitt (50) das Lochmuster umfasst.

4. Aufsatz (10) nach einem oder mehreren der vorangegangenen Ansprüche, **dadurch gekennzeichnet, dass**
das erste umfängliche Segment (16) einen kreisbogenartig ausgebildeten Abschnitt umfasst, vorzugsweise durch diesen gebildet ist, vorzugsweise das erste umfängliche Segment (16) eine umfängliche Erstreckung von mehr als 180°, vorzugsweise von mehr als 190°, insbesondere von mehr als 195°, aufweist, vorzugsweise wobei sich ein etwaig vorhandener Befestigungsabschnitt (50) kreissehnenartig über den Bereich des Lochkreises (4) des Fahrzeugrades (1) erstreckt,
und/oder das Montageelement (26) V-förmig ausgebildet ist, wobei sich zwei Schenkel (54) des Montageelements (26) in der Montageposition wenigstens vom Bereich des Lochkreises (4) bis zum zweiten umfänglichen Segment (18) erstrecken, oder dass das Montageelement (26) stabartig ausgebildet ist, wobei es sich in der Montageposition wenigstens vom Bereich des Lochkreises (4) bis zum zweiten umfänglichen Segment (18) erstreckt, vorzugsweise wobei es sich vom ersten umfänglichen Segment (16) über den Bereich des Lochkreises (4) zum zweiten umfänglichen Segment (18) erstreckt,
und/oder das Montageelement (26) kreisscheibenartig oder kreisringscheibenartig ausgebildet ist, vorzugsweise wobei das Montageelement (26) am Lochkreis (4) des Fahrzeugrads (1) befestigbar ist.

5. Aufsatz (10) nach einem oder mehreren der vorangegangenen Ansprüche, **dadurch gekennzeichnet, dass** das zweite umfängliche Segment (18) über eine Scharniereinrichtung (52), vorzugsweise über zwei Scharniereinrichtungen (52), schwenkbar an dem ersten umfänglichen Segment (16) befestigt ist,

6. Aufsatz (10) nach einem oder mehreren der vorangegangenen Ansprüche, **dadurch gekennzeichnet, dass** an dem ersten umfänglichen Segment (16) und/oder an dem zweiten umfänglichen Segment (18) wenigstens ein Spannmittel (32), vorzugsweise mehrere Spannmittel (32), mit einem Hakabschnitt (34) angeordnet ist bzw. sind, wobei der Hakabschnitt (34) ausgebildet ist, um in einem Betriebszustand des Aufsatzes (10) einen Abschnitt (9), insbesondere ein Felgenhorn (9), der Felge (2) des Fahrzeugrads (1) zu hintergreifen.

7. Aufsatz (10) nach dem vorangegangenen Anspruch, **dadurch gekennzeichnet, dass** die Spannmittel (32) eine in axialer Richtung (A) gesehen nach radial innen, vorzugsweise linear oder bogenförmig, abfallende Spannfläche (40) umfassen, wobei die Spannmittel (32) derart ausgebildet sind, dass sich die Spannfläche (40) beim Befestigen und Verspannen des Aufsatzes (10) an der Felge (2) nach radial innen bewegt, insbesondere verschiebt, und die Spannfläche (40) derart ausgebildet ist, dass der Aufsatz (10) beim Befestigen und Verspannen an der Felge (2) des Fahrzeugrads (1) in axialer Richtung (A) zur Felge (2) hin gedrängt wird.

8. Aufsatz (10) nach einem der beiden vorangegangenen Ansprüche, **dadurch gekennzeichnet, dass** der Aufsatz (10) einen Verspannmechanismus (122) mit einem Kontaktabschnitt (120) umfasst, der ausgebildet ist, um das Spannmittel (32) zu betätigen und den Hakabschnitt (34) in Hintergriff mit dem Abschnitt (9) der Felge (2), vorzugsweise dem Felgenhorn (9), zu bringen, wenn der Kontaktabschnitt (120), betätigt, insbesondere mit Druck beaufschlagt, wird.

9. Aufsatz (10) nach einem der drei vorangegangenen Ansprüche, **dadurch gekennzeichnet, dass** der Verspannmechanismus (122) ausgebildet ist, um mit dem Kontaktabschnitt (120) bei am Fahrzeugrad (1) angebrachtem Aufsatz (10) und sich drehendem Fahrzeugrad (1) eine Fahrbahn (F) zu kontaktieren und dadurch den Kontaktabschnitt (120) zu betätigen, insbesondere mit Druck zu beaufschlagen, vorzugsweise wobei der Kontaktabschnitt (120) räumlich, insbesondere in axialer Richtung (A) gesehen, in der Lauffläche (22) des Aufsatzes (10) angeordnet ist und vorzugsweise wobei der Kontaktabschnitt (120) in einem ausgefahrenen Zustand in Umfangsrichtung (U) absatzfrei mit der Lauffläche (22) des Aufsatzes (10) verläuft.

10. Aufsatz (10) nach einem der vier vorangegangenen Ansprüche, **dadurch gekennzeichnet, dass** der Verspannmechanismus (122) ausgebildet ist, um mit dem Kontaktabschnitt (120) die Felge (2) zu kontaktieren, wenn der Aufsatz am Fahrzeugrad (1) angebracht wird, und dadurch den Kontaktabschnitt (120) zu betätigen, insbesondere mit Druck zu beaufschlagen, vorzugsweise wobei der Kontaktabschnitt (120) auf der der Felge (2) zugewandten Seite des Aufsatzes (10) angeordnet ist.

11. Aufsatz (10) nach einem der fünf vorangegangenen Ansprüche, **dadurch gekennzeichnet, dass** der Verspannmechanismus (122) eine Freilaufeinrichtung (136) umfasst, wobei die Freilaufeinrichtung (136) ausgebildet ist, um eine freie Bewegung des Kontaktabschnitts (120) zu ermöglichen, wenn der Hakabschnitt (34) in Hintergriff mit dem Abschnitt (9) der Felge (2), insbesondere dem Felgenhorn (9), steht.

12. Aufsatz (10) nach einem der sechs vorangegangenen Ansprüche, **dadurch gekennzeichnet, dass** das Spannmittel (32) über eine Druckbegrenzungseinrichtung (152) mit dem Verspannmechanismus (122) gekoppelt ist, wobei die Druckbegrenzungseinrichtung (152) dazu eingerichtet ist, einen Druck, mit dem das Spannmittel (32) zur Felge (2) hin gedrängt wird und/oder mit der das Spannmittel (32) die Felge (2) kontaktiert, auf einen Grenzdruck zu begrenzen.

13. Aufsatz (10) nach einem der sieben vorangegangenen Ansprüche, **dadurch gekennzeichnet**, der Verspannmechanismus (122) einen Haltemechanismus (147) umfasst, der ausgebildet ist, um das Spannmittel (32) in seiner Position zu halten, wenn das Spannmittel (32) mit seinem Hakabschnitt (34) in Hintergriff mit dem Abschnitt (9) der Felge (2), vorzugsweise dem Felgenhorn (9), steht.

14. Aufsatz (10) nach einem oder mehreren der vorangegangenen Ansprüche, **dadurch gekennzeichnet, dass** der Aufsatz (10) ein Eingriffselement (64) umfasst, das ausgebildet ist, um den Befestigungsabschnitt (50) und/oder das Montageelement (26) an der Mittenöffnung(6) direkt oder indirekt, vorzugsweise über ein Spannelement(74), insbesondere über eine Spannschraube (74), zu befestigen, vorzugsweise, wobei das Eingriffselement (64) einen Eingriffsabschnitt (68) umfasst, der ausgebildet ist, um einen Abschnitt (12), vorzugsweise eine Nut (12), der Mittenöffnung (6) formschlüssig zu hintergreifen, vorzugsweise wobei der Eingriffsabschnitt (68) mechanisch aufweitbar oder elastisch schwenkbar ist.

15. Aufsatz (10) nach einem oder mehreren der vorangegangenen Ansprüche, **dadurch gekennzeichnet, dass** der Befestigungsabschnitt (50) eine Einrichtung (193) zum klemmenden und/oder hintergreifenden Erfassen einer, vorzugsweise herkömmlichen, Radschraube (194) umfasst, vorzugsweise wobei die Einrichtung (193) eine Klemmhaube (198) mit wenigstens zwei Klemmarmen (1100) umfasst und eine Klemmhülse (1102), die wenn sie auf die Klemmhaube (198) aufgeschoben wird, die Klemmarme (1100) derart aufeinander zu spannt, dass ein Kopf (196) einer Radschraube (194) durch die Klemmarme (1100) greifbar ist, umfasst und einen Bolzen (1104), mit dem die Klemmhülse (1102) gegen die Klemmhaube (198) spannbar ist, umfasst.

## Claims

1. An attachment (10) for a vehicle wheel (1) for enabling driving operation with limited tire function, having a base body (20) which in an operating state of the attachment (10) has an annular tread surface (22),
wherein the base body (20) comprises at least a first peripheral segment (16) and a second peripheral segment (18),
wherein the first peripheral segment (16) is configured to be rigid in the peripheral direction (U) and can be fastened to the vehicle wheel (1),
wherein the first peripheral segment (16) further comprises a fastening portion (50) *via* which it can be fastened in the region of a bolt circle (4), preferably to the bolt circle (4), of the vehicle wheel (1),
wherein the attachment (10) comprises a mounting element (26) which is fastened to the attachment (10), preferably the first peripheral segment (16), and/or to the vehicle wheel (1) in such a manner, or is configured to be capable of being fastened thereto in such a manner, that it can be transferred into a mounting position or is in the mounting position, wherein the mounting element (26) aligns the second peripheral segment (18) relative to the first peripheral segment (16) and urges it towards the rim (2) of the vehicle wheel (1) when the first peripheral segment (16) is fastened to the vehicle wheel (1) and the mounting element (26) is in the mounting position, and
wherein the mounting element (26) comprises a hole pattern which corresponds in any case to a portion of the hole pattern of the bolt circle of the vehicle wheel (1).

2. The attachment (10) as claimed in claim 1,
**characterized in that** the mounting element (26) is pivotable or displaceable relative to the first peripheral segment (16),
and/or the mounting element (26) is detachable from the first peripheral segment (16),
and/or securing devices (31) for the mounting element (26) are arranged on the first peripheral segment (16) and/or on the second peripheral segment (18), in order to fix the position of the mounting element, preferably in the peripheral direction (U), relative to the first peripheral segment (16) or the second peripheral segment (18).

3. The attachment (10) as claimed in one or more of the preceding claims, **characterized in that** also fastening portion (50) comprises the hole pattern.

4. The attachment (10) as claimed in one or more of the preceding claims, **characterized in that**
the first peripheral segment (16) comprises an arcuate portion, preferably is formed thereby, preferably the first peripheral segment (16) has a peripheral extent of more than 180°, preferably of more than 190°, in particular of more than 195°, preferably wherein a fastening portion (50) which may be present extends in the manner of a chord over the region of the bolt circle (4) of the vehicle wheel (1),
and/or the mounting element (26) is V-shaped, wherein two legs (54) of the mounting element (26) extend in the mounting position at least from the region of the bolt circle (4) to the second peripheral segment (18), or wherein the mounting element (26) is in rod form, wherein it extends in the mounting position at least from the region of the bolt circle (4) to the second peripheral segment (18), preferably wherein it extends from the first peripheral segment (16) over the region of the bolt circle (4) to the second peripheral segment (18),
and/or the mounting element (26) is in circular-disk or annular form, preferably wherein the mounting element (26) can be fastened to the bolt circle (4) of the vehicle wheel (1).

5. The attachment (10) as claimed in one or more of the preceding claims, **characterized in that** the second peripheral segment (18) is pivotably fastened to the first peripheral segment (16) *via* a hinge device (52), preferably *via* two hinge devices (52).

6. The attachment (10) as claimed in one or more of the preceding claims, **characterized in that** at least one clamping means (32), preferably a plurality of clamping means (32), having a hook portion (34) is or are arranged on the first peripheral segment (16) and/or on the second peripheral segment (18), wherein the hook portion (34) is configured to engage behind a portion (9), in particular a rim flange (9), of the rim (2) of the vehicle wheel (1) in an operating state of the attachment (10).

7. The attachment (10) as claimed in the preceding claim,
**characterized in that** the clamping means (32) comprise a clamping surface (40) which, when seen in the axial direction (A), slopes radially inwards, preferably in a linear or curved manner, wherein the clamping means (32) are so configured that the clamping surface (40) moves, in particular is displaced, radially inwards when the attachment (10) is fastened and clamped to the rim (2), and the clamping surface (40) is so configured that the attachment (10) is urged in the axial direction (A) towards the rim (2) when it is fastened and clamped to the rim (2) of the vehicle wheel (1).

8. The attachment (10) as claimed in any one of the preceding two claims, **characterized in that** the attachment (10) comprises a clamping mechanism (122) having a contact portion (120) which is configured to actuate the clamping means (32) and bring the hook portion (34) into engagement behind the portion (9) of the rim (2), preferably the rim flange (9), when the contact portion (120) is actuated, in particular subjected to pressure.

9. The attachment (10) as claimed in any one of the preceding three claims, **characterized in that** the clamping mechanism (122) is configured, when the attachment (10) is attached to the vehicle wheel (1) and the vehicle wheel (1) is turning, to contact a road surface (F) with the contact portion (120) and thereby actuate the contact portion (120), in particular subject it to pressure, preferably wherein the contact portion (120) is arranged spatially, in particular when seen in the axial direction (A), in the tread surface (22) of the attachment (10) and preferably wherein the contact portion (120), in a deployed state, extends in the peripheral direction (U) flush with the tread surface (22) of the attachment (10).

10. The attachment (10) as claimed in any one of the preceding four claims, **characterized in that** the clamping mechanism (122) is configured to contact the rim (2) with the contact portion (120) when the attachment is attached to the vehicle wheel (1) and thereby actuate the contact portion (120), in particular subject it to pressure, preferably wherein the contact portion (120) is arranged on the side of the attachment (10) that faces the rim (2).

11. The attachment (10) as claimed in any one of the preceding five claims, **characterized in that** the clamping mechanism (122) comprises a freewheel device (136), wherein the freewheel device (136) is configured to allow the contact portion (120) to move freely when the hook portion (34) is in engagement behind the portion (9) of the rim (2), in particular the rim flange (9).

12. The attachment (10) as claimed in any one of the preceding six claims, **characterized in that** the clamping means (32) is coupled with the clamping mechanism (122) *via* a pressure limiting device (152), wherein the pressure limiting device (152) is adapted to limit a pressure with which the clamping means (32) is urged towards the rim (2) and/or with which the clamping means (32) contacts the rim (2) to a limit pressure.

13. The attachment (10) as claimed in any one of the preceding seven claims, **characterized in that** the clamping mechanism (122) comprises a holding mechanism (147) which is configured to hold the clamping means (32) in its position when the clamping means (32) is in engagement with its hook portion (34) behind the portion (9) of the rim (2), preferably the rim flange (9).

14. The attachment (10) as claimed in one or more of the preceding claims, **characterized in that** the attachment (10) comprises an engagement element (64) which is configured to fasten the fastening portion (50) and/or the mounting element (26) to the center opening (6) directly or indirectly, preferably *via* a clamping element (74), in particular *via* a clamping screw (74), preferably wherein the engagement element (64) comprises an engagement portion (68) which is configured to engage in a form-fitting manner behind a portion (12), preferably a groove (12), of the center opening (6), preferably wherein the engagement portion (58) is mechanically expandable or resiliently pivotable.

15. The attachment (10) as claimed in one or more of the preceding claims, **characterized in that** the fastening portion (50) comprises a device (193) for gripping a wheel bolt (194), preferably a conventional wheel bolt, by clamping and/or engaging behind it, preferably wherein the device (193) comprises a clamping cap (198) having at least two clamping arms (1100) and comprises a clamping sleeve (1102) which, when it is pushed onto the clamping cap (198), biases the clamping arms (1100) towards one another in such a manner that a head (196) of a wheel bolt (194) can be gripped by the clamping arms (1100), and comprises a bolt (1104) with which the clamping sleeve (1102) can be clamped against the clamping cap (198).

## Revendications

1. Pièce rapportée (10) pour une roue de véhicule (1) permettant à la roue de continuer à rouler en cas de fonctionnement limité d'un pneu, comprenant un corps de base (20), qui comporte dans un état de fonctionnement de la pièce rapportée (10) une bande de roulement circulaire (22)
le corps de base (20) comprenant au moins un premier segment périphérique (16) et un second segment périphérique (18),
le premier segment périphérique (16) étant rigide dans la direction circonférentielle (U) et pouvant être fixé à la roue de véhicule (1),
le premier segment périphérique (16) comprenant une section de fixation (50), par lequel il peut être fixé dans la zone de l'implantation de trou (4), de préférence au niveau de l'implantation de trou (4) de la roue de véhicule (1),
la pièce rapportée (10) comprenant en outre un élément de montage (26) qui est fixé ou conçu sur la pièce rapportée (10), de préférence sur le premier segment périphérique (16) et/ou sur la roue de véhicule (1) pour qu'il puisse être fixé sur celle=ci, de manière à ce qu'il puisse être amené dans une position de montage ou qu'il se trouve dans la position de montage, l'élément de montage (26) aligne le second segment périphérique (18) par rapport au premier segment périphérique (16) et s'appuie contre la jante (2) de la roue de véhicule (1), lorsque le premier segment périphérique (16) est fixé à la roue de véhicule (1) et que l'élément de montage (26) se trouve dans la position de montage, et
l'élément de montage (26) comprenant une configuration de perçage qui correspondant à chaque fois à une partie de la configuration de perçage du cercle de boulonnage de la roue de véhicule (1).

2. Pièce rapportée (10) selon la revendication 1, **caractérisée en ce que**
l'élément de montage (26) peut pivoter ou se déplacer par rapport au premier segment périphérique (16),
et/ou l'élément de montage (26) peut être libéré du premier segment périphérique (16),
et/ou sur le premier segment périphérique (16) et/ou sur le second segment périphérique (18) sont disposés des dispositifs de sécurité (31) destinés à l'élément de montage (26), pour définir leur position, de préférence dans la direction circonférentielle (U), par rapport au premier segment périphérique (16) ou par rapport au second segment périphérique (18).

3. Pièce rapportée (10) selon une ou plusieurs des revendications précédentes, **caractérisée en ce que** la section de fixation (50) comprend également la configuration de perçage.

4. Pièce rapportée (10) selon une ou plusieurs des revendications précédentes, **caractérisée en ce que**
le premier segment périphérique (16) comprend une section conçue en forme d'arc, de préférence formée par celui=ci, de préférence un premier segment périphérique (16) présente une étendue périphérique supérieure à 180°, de préférence supérieure à 190°, en particulier supérieure à 195°, de préférence une section de fixation (50) éventuellement présente s'étend à la manière en corde de cercle sur la zone de l'implantation de trou (4) de la roue de véhicule (1),
et/ou l'élément de montage (26) est conçu en forme de V, deux épaulements (54) de l'élément de montage (26) dans la position de montage s'étendent au moins depuis la zone de l'implantation de trou (4) jusqu'au second segment périphérique (18), ou **en ce que** l'élément de montage (26) est conçu en forme de barre, s'étendant dans la position de montage au moins depuis la zone de l'implantation de trou (4) jusqu'au second segment périphérique (18), de préférence s'étendant depuis le premier segment périphérique (16) en passant par la zone de l'implantation de trou (4) jusqu'au second segment périphérique (18),
et/ou l'élément de montage (26) est conçu en forme de disque circulaire ou en forme de disque annulaire, de préférence l'élément de montage (26) étant fixé sur l'implantation de trou (4) de la roue de véhicule (1).

5. Pièce rapportée (10) selon une ou plusieurs des revendications précédentes, **caractérisée en ce que** le second segment périphérique (18) est fixé par un dispositif d'articulation (52), de préférence par deux dispositifs d'articulation (52) de manière pivotante sur le premier segment périphérique (16),

6. Pièce rapportée (10) selon une ou plusieurs des revendications précédentes, **caractérisée en ce que** sur le premier segment périphérique (16) et/ou sur le second segment périphérique (18) au moins un moyen de serrage (32), de préférence plusieurs moyens de serrage (32), avec une section crochet (34) est/sont disposé(s), la section crochet (34) étant conçue pour venir se bloquer sur l'arrière au niveau d'une section (9) en particulier un rebord de jante (9), de la jante (2) de la roue de véhicule (1) lorsque la pièce rapportée (10) est en cours de fonctionnement.

7. Pièce rapportée (10) selon la revendication précédente, **caractérisée en ce que** le moyen de serrage (32) comprennent une surface de serrage (40) descendante lorsque observée dans la direction axiale (A), de préférence linéaire ou en arquée radialement vers l'intérieur, les moyens de serrage (32) étant conçus de manière à ce que la surface de serrage (40) se déplace ou est repoussée radialement vers l'intérieur lorsque la pièce rapportée (10) est fixée et serrée sur la jante (2), et la surface de serrage (40) est conçue de manière à ce que la pièce rapportée (10) est poussée dans la direction axiale (A) vers la jante (2) lors de la fixation et le serrage sur la jante (2) de la roue de véhicule (1).

8. Pièce rapportée (10) selon l'une des deux revendications précédentes, **caractérisée en ce que** la pièce rapportée (10) comprend un mécanisme de serrage (122) avec une section de contact qui est conçu pour actionner le moyen de serrage (32) et amener la section crochet (32) par blocage arrière avec la section (9) de la jante (2), de préférence le rebord de jante (9) lorsque la section de contact (120) est actionnée, en particulier est soumis à l'action de la pression.

9. Pièce rapportée (10) selon l'une des trois revendications précédentes, **caractérisée en ce que** le mécanisme de serrage (122) est conçu pour entrer en contact avec une chaussée (F) au moyen de la section de contact (120) lorsque la pièce rapportée (10) se trouve sur la roue de véhicule (10) et que la roue de véhicule (1) tourne et pour ainsi actionner la section de contact (120), en particulier pour la soumettre à l'action de la pression, de préférence la section de contact (120) étant disposée spatialement, en particulier lorsqu'elle est observée dans la direction axiale (A), dans la bande de roulement (22) de la pièce rapportée (10) et de préférence la section de contact (120) s'étend lorsqu'elle est sortie dans la direction circonférentielle (U) sans palier avec la bande de roulement (22) de la pièce rapportée (10).

10. Pièce rapportée (10) selon l'une des quatre revendications précédentes, **caractérisée en ce que** le mécanisme de serrage (122) est conçu pour entrer en entrer en contact avec la jante (2) au moyen de la section de contact (120), lorsque la pièce rapportée est amenée sur la roue de véhicule (1), et ainsi actionner la section de contact (120), en particulier la soumettre à l'effet de la pression, de préférence la section de contact (120) étant disposée sur le côté de la pièce rapportée (10) orientée vers la jante (2).

11. Pièce rapportée (10) selon l'une des cinq revendications précédentes, **caractérisée en ce que** le mécanisme de serrage (122) comprend un dispositif de roue libre (136), le dispositif de roue libre (136) étant conçu pour permettre un mouvement libre de la section de contact (120), lorsque la section crochet (34) vient bloquer par l'arrière avec la section (9) de la jante (2), en particulier le rebord de la jante (9).

12. Pièce rapportée (10) selon l'une des six revendications précédentes, **caractérisée en ce que** le moyen de serrage (32) est accouplé par un dispositif de limitation de pression (152) au mécanisme de serrage (122), le dispositif de limitation de pression (152) étant conçu pour limiter une pression avec laquelle le moyen de serrage (32) est poussé vers la jante (2) et/ou avec laquelle le moyen de serrage (32) entre en contact avec la jante (2), à une pression limite.

13. Pièce rapportée (10) selon l'une des sept revendications précédentes, **caractérisée en ce que** le mécanisme de serrage (122) comprend un mécanisme de retenue (147) qui est conçu pour retenir le moyen de serrage (32) dans sa position, lorsque le moyen de serrage (32) vient en bloquer par l'arrière avec sa section crochet (34) la section (9) de la jante (2), de préférence le rebord de jante (9).

14. Pièce rapportée (10) selon une ou plusieurs des revendications précédentes, **caractérisée en ce que** la pièce rapportée (10) comprend un élément de mise en prise (64) qui est conçu pour fixer la section de fixation (50) et/ou l'élément de montage (26) sur l'ouverture centrale (6) directement ou indirectement, de préférence au moyen d'un élément de serrage (74), en particulier au moyen d'une vis de serrage (74), de préférence, l'élément de mise en prise (64) comprend une section de mise en prise (68) qui est conçu pour venir bloquer par l'arrière par complémentarité de forme une section (12) de préférence une rainure (12), de préférence la section de mise en prise (68) est expansible mécaniquement ou pivotable élastiquement.

15. Pièce rapportée (10) selon une ou plusieurs des revendications précédentes, **caractérisée en ce que** la section de fixation (50) comprend un dispositif (193) servant à saisir par accrochage et/ou par blocage par l'arrière d'une vis de roue (194) de préférence traditionnelle, de préférence le dispositif (193) comprenant un capot (198) avec au moins deux bras d'accrochage (1100) et comprend un manchon d'accrochage (1102), qui lorsqu'ils sont poussés sur le capot (198) serrent les bras d'accrochage (1100) l'un contre l'autre de sorte que la tête (196) d'une vis de roue (194) puisse être saisie par les bras de serrage (1100), et un boulon (1104) avec lequel le manchon de serrage (1102) peut être serré contre le capot (198).
